# EUROPEAN PATENT SPECIFICATION

(11) **EP 2 829 825 B1**
(45) Date of publication and mention of the grant of the patent: **25.04.2018**
(21) Application number: 12864020.8
(22) Date of filing: 27.11.2012
(51) Int. Cl.: F25B 47/02, F24D 3/18, F24D 19/10, F25B 13/00

(54) **METHOD FOR CONTROLLING HEATING SYSTEM, AND HEATING SYSTEM**
STEUERVERFAHREN FÜR EIN HEIZSYSTEM UND HEIZSYSTEM
PROCÉDÉ POUR COMMANDER UN SYSTÈME DE CHAUFFAGE ET SYSTÈME DE CHAUFFAGE

(30) Priority: 21.03.2012 JP 2012064185
(43) Date of publication of application: 28.01.2015
(73) Proprietor: Panasonic Intellectual Property Management Co., Ltd., Osaka-shi, Osaka 540-6207 (JP)
(72) Inventor: HAYASHIDA, Gaku, Osaka-shi, Osaka 540-6207 (JP); TAKASAKI, Shinichi, Osaka-shi, Osaka 540-6207 (JP); KHAISONGKRAM, Wathanyoo, Osaka-shi, Osaka 540-6207 (JP)
(74) Representative: Grünecker Patent- und Rechtsanwälte PartG mbB
(86) International application number: PCT/JP2012/007591
(87) International publication number: WO 2013/140479

(56) References cited:
- WO-A1-2011/016551
- JP-A- 2002 195 650
- JP-A- 2003 302 131
- JP-A- 2004 020 097
- JP-A- 2004 156 847
- JP-A- 2004 156 847
- JP-A- 2008 180 473
- JP-A- 2010 249 333
- US-A- 4 627 484
- US-A1- 2012 047 920

## Description

### [Technical Field]

The present invention is related to heating system control methods, and in particular, to a control method for a heating system including a heat pump heating device.

### [Background Art]

A heat pump hot water supply device heats a refrigerant by absorbing heat from the atmosphere and compressing the refrigerant using electricity. The heat is then transferred to the water via a heat exchanger, creating hot water. The heat pump hot water supply device uses less energy than a conventional electric hot water heater. A heat pump heating device is an energy saving heating device that, similar to the heat pump hot water supply device, uses water heated by the heat pump for heating.

When the outside temperature is low, frost forms on the heat exchanger as the heat pump absorbs heat from the atmosphere. The more frost builds up on the heat exchanger, the more difficult heat is to absorb from the atmosphere. As a result, a problem arises that the output and efficiency of the heat pump decreases. For this reason, general heat pump apparatuses include a function for removing frost upon detection of a given amount of frost on the heat exchanger.

### [Citation List]

### [Patent Literature]

US 2012/047920 A1 represents the prior art closest to the subject-matter of claim 1 and discloses a method and apparatus using evaporator fan power to determine defrost cycle for a refrigerator appliance. The method comprising steps that use the voltage supplied to fan to determine whether to initiate a defrost cycle. In particular, if the voltage reaches the predetermined value V_{def}, i.e. the desired maximum voltage for operation of fan, the defrost cycle should be initiated. Hence, it is determined whether the fan has reached the value V_{def} and if so, the evaporator has to be defrosted and the defrost cycle is initiated.

[PTL 1] Japanese Unexamined Patent Application Publication No. 2010-249333

### [Summary of Invention]

### [Technical Problem]

The percentage of power used as the source of energy for covering thermal demands has increased along with the use of heat pumps in recent years. As such, the power demand peak continues to rise. For this reason, in addition to the conventional contract based system in which electricity costs increase during a peak time period, power companies have begun offering consumers the choice of a contract based system with somewhat reduced electricity costs in exchange for electric load modulation during a specified peak time period. Under this contract system, when the electric load is modulated during the peak time period, a problem arises in that comfort is sacrificed due to a decrease in room temperature resulting from an insufficient power output of the heat pump with respect to the demand of the heater.

Thus, in order to solve the above-mentioned problem, the present invention aims to provide a heat pump heating system control method which can easily stabilize grid power by implementing a peak cut and increase the comfort level of the user.

### [Solution to Problem]

A method of controlling a heating system according to an aspect of the present invention is a method of controlling a heating system that operates using power supplied from a power supply source. The heating system includes a heat pump that generates heat using the power supplied from the power supply source and a radiator unit that radiates the heat generated by the heat pump. The heat pump is operable in a heating mode for generating heat to be radiated by the radiating unit and a defrost mode for removing frost formed on the heat pump. The method includes: obtaining, from the power supply source, an output modulation instruction specifying an output modulation period during which power consumption by the heat pump is modulated; when the output modulation instruction is obtained in the obtaining, predicting a state of the heat pump in a given period including the output modulation period and determining whether the state of the heat pump predicted satisfies a first condition indicating that switching a mode of operation of the heat pump to the defrost mode is required; and controlling the mode of operation of the heat pump according to a determination result of the predicting and determining. In the controlling, when it is determined in the predicting and determining that the state of the heat pump in the given period satisfies the first condition, the mode of operation of the heat pump is switched to the defrost mode before a start time of the output modulation period, and when it is determined in the predicting and determining that the state of the heat pump in the given period does not satisfy the first condition, the heat pump is caused to operate in the heating mode, without switching the mode of operation of the heat pump to the defrost mode before the start time of the output modulation period.

It should be noted that general or specific embodiments may be realized as a system, method, integrated circuit, computer program, storage media, or any elective combination thereof.

### [Advantageous Effects of Invention]

With the heat pump heating system control method according to the present invention, it is possible to avoid defrosting during the peak time period, during which power consumption increases. This contributes to the stabilization of grid power due to the peak cut and an increase in the comfort level of the user.

### [Brief Description of Drawings]

[FIG. 1] FIG. 1 is a flow chart outlining the processes performed by the heat pump heating system according to the first embodiment.
[FIG. 2] FIG. 2 is a block diagram showing the configuration of heat pump heating system according to the first embodiment.
[FIG. 3] FIG. 3 is a block diagram showing the heat pump heating device according to the first embodiment in detail.
[FIG. 4A] FIG. 4A shows the refrigerant cycle in the heat pump when operating in the heating mode according to the first embodiment.
[FIG. 4B] FIG. 4B shows the refrigerant cycle in the heat pump when operating in the defrost mode according to the first embodiment.
[FIG. 5] FIG. 5 is a block diagram showing the system control unit according to the first embodiment in detail.
[FIG. 6] FIG. 6 is a flow chart of the processes of the heat pump heating system as a whole according to the first embodiment.
[FIG. 7] FIG. 7 is a flow chart of the heat pump control process according to the first embodiment.
[FIG. 8] FIG. 8 is a flow chart of the DR control process according to the first embodiment.
[FIG. 9] FIG. 9 is a flow chart of the advance defrost control process according to the first embodiment.
[FIG. 10] FIG. 10 shows an example of the information transmitted between each structural element according to the first embodiment.
[FIG. 11A] FIG. 11A is an example of an HP output prediction table for a period outside of the DR period according to the first embodiment.
[FIG. 11B] FIG. 11B is an example of an HP output prediction table for the DR period according to the first embodiment.
[FIG. 12A] FIG. 12A shows a heat exchanger surface temperature prediction table according to the first embodiment.
[FIG. 12B] FIG. 12B shows an example of a prediction result of the heat exchanger surface temperature according to the first embodiment.
[FIG. 13A] FIG. 13A shows an example of a change in temperature when the defrost condition is satisfied according to the first embodiment.
[FIG. 13B] FIG. 13B shows an example of a change in temperature when the defrost condition is not satisfied according to the first embodiment.
[FIG. 14] FIG. 14 shows shifts in the power consumption, electrical cost, and room temperature with the heat pump heating system according to the first embodiment.
[FIG. 15] FIG. 15 is a flow chart of the advance defrost control according to the second embodiment.
[FIG. 16] FIG. 16 shows shifts in the power consumption and room temperature with the heat pump heating system according to the second embodiment.
[FIG. 17] FIG. 17 is a flow chart of the advance defrost control according to the third embodiment.
[FIG. 18] FIG. 18 shows shifts in the power consumption and room temperature with the heat pump heating system according to the third embodiment.

### [Description of Embodiments]

### (Underlying Knowledge Forming Basis of the Present Invention)

For example, PTL 1 discloses a technique of generating an operation schedule for reducing power consumption using optimization problem solutions, along with a decrease in heat pump efficiency due to frost and a defrost timing chart.

However, with the method disclosed in PTL 1, when an operation schedule designed with power consumption in mind and the contract system disclosed in the Technical Problem section are used, there are times when the defrost cycle is used during the peak time period (when the cost of electricity is high). In this case, there is a problem that despite being in the peak time period during which room temperature decreases due to an insufficient power output of the heat pump, the room temperature decreases even further and comfort is sacrificed because it is not possible for the heat pump to cater to thermal demands while defrosting.

Moreover, when defrosting is performed during the peak time period, despite not being able to cater to thermal demands nor contributing to comfort, not only is it uneconomical due to the costly electricity rates, but an unnecessary load is placed on grid power. Furthermore, applying the technique disclosed in PTL 1 to optimize power consumption as well as electricity expenses and comfort is problematic because total cost increases and a solution cannot be obtained in real-time.

In order to solve the above-described problem, a method of controlling a heating system according to an aspect of the present invention is a method of controlling a heating system that operates using power supplied from a power supply source. The heating system includes a heat pump that generates heat using the power supplied from the power supply source and a radiator unit that radiates the heat generated by the heat pump. The heat pump is operable in a heating mode for generating heat to be radiated by the radiating unit and a defrost mode for removing frost formed on the heat pump. The method includes: obtaining, from the power supply source, an output modulation instruction specifying an output modulation period during which power consumption by the heat pump is modulated; when the output modulation instruction is obtained in the obtaining, predicting a state of the heat pump in a given period including the output modulation period and determining whether the state of the heat pump predicted satisfies a first condition indicating that switching a mode of operation of the heat pump to the defrost mode is required; and controlling the mode of operation of the heat pump according to a determination result of the predicting and determining. In the controlling, when it is determined in the predicting and determining that the state of the heat pump in the given period satisfies the first condition, the mode of operation of the heat pump is switched to the defrost mode before a start time of the output modulation period, and when it is determined in the predicting and determining that the state of the heat pump in the given period does not satisfy the first condition, the heat pump is caused to operate in the heating mode, without switching the mode of operation of the heat pump to the defrost mode before the start time of the output modulation period.

With this, it is possible to avoid defrosting during the peak time period by, for example, setting the peak time period, during which power consumption increases, as the output modulation period. This contributes to the stabilization of grid power due to the peak cut, a decrease in user electricity expenses, and an increase in the comfort level of the user.

Moreover, the controlling may be performed while the heat pump is not operating in the defrost mode after obtaining the output modulation instruction.

The method further includes modulating operation of the heat pump in the output modulation period. In the modulating, the heat pump is caused to operate in an output modulation mode and prevented from operating in the defrost mode, the output modulation mode causing an output of the heat pump to be smaller than an output of the heat pump in the heating mode.

Moreover, in the output modulation mode, the heat pump may operate at an output no greater than half of a rated output of the heat pump.

Moreover, when the state of the heat pump satisfies a second condition indicating that the frost has been removed, the heat pump may be switched from the defrost mode to the heating mode. In the controlling, the switching of the heat pump to the defrost mode may be timed so that the state of the heat pump satisfies the second condition before the start time of the output modulation period.

Moreover, the given period may end at an end time of the output modulation period.

The method may further include switching an amount of heat generated per unit time by the heat pump from a first amount of heat to a second amount of heat at the start time of the output modulation period and from the second amount of heat to the first amount of heat at an end time of the output modulation period, the second amount of heat being less than the first amount of heat. The given period may end at a point in time after the end time of the output modulation period at which a temperature of a room in which the radiator unit is installed returns to a level at a point in time of the obtainment of the output modulation instruction.

Moreover, the given period may end the following morning.

Moreover, when the state of the heat pump satisfies a second condition indicating that the frost has been removed, the heat pump may be switched from the defrost mode to the heating mode. In the controlling, the switching of the heat pump to the defrost mode may be timed so that a temperature of a room in which the radiator unit is installed returns to a level prior to the heat pump switching to the defrost mode before the start time of the output modulation period.

A heating system according to an aspect of the present invention is a heating system that operates using power supplied from a power supply source. The heating system includes a heating device and a system control unit configured to control the heating device. The heating device includes a heat pump that generates heat using the power supplied from the power supply source and a radiator unit configured to radiate the heat generated by the heat pump. The heat pump is switchable between a heating mode for generating heat to be radiated by the radiator unit and a defrost mode for removing frost formed on the heat pump. The system control unit includes: an obtaining unit configured to obtain, from the power supply source, an output modulation instruction specifying an output modulation period during which power consumption by the heat pump is modulated; a prediction unit configured to, when the output modulation instruction is obtained by the obtaining unit, predict a state of the heat pump in a given period including the output modulation period; an advance defrost determination unit configured to determine whether the state of the heat pump predicted by the prediction unit satisfies a first condition indicating that switching a mode of operation of the heat pump to the defrost mode is required; and an instruction unit configured to make a notification to switch the mode of operation of the heat pump to the defrost mode before a start time of the output modulation period when it is determined by the determination unit that the state of the heat pump in the given period satisfies the first condition.

The heating device may further include a heat pump control unit configured to control operation of the heat pump. When the heat pump control unit obtains the notification from the instruction unit, the heat pump control unit may be configured to switch the mode of operation of the heat pump to the defrost mode before the start time of the output modulation period.

Moreover, when the defrost determination unit determines that the state of the heat pump in the given period does not satisfy the first condition, the heat pump control unit may be configured to cause the heat pump to operate in the heating mode, without switching the mode of operation of the heat pump to the defrost mode before the start time of the output modulation period.

The heating device may further include a heat exchanger surface temperature detecting unit.

The heat pump system control unit further includes an output modulation operation control unit configured to cause the heat pump to operate in an output modulation mode in the output modulation period, the output modulation mode causing an output of the heat pump to be smaller than an output of the heat pump in the heating mode.

A heating system according to another embodiment of the present invention is a heating system that operates using power supplied from a power supply source. The heating system includes a heating device. The heating device includes: a heat pump that generates heat using the power supplied from the power supply source; a radiator unit configured to radiate the heat generated by the heat pump; a heat pump control unit configured to switch a mode of operation of the heat pump between a heating mode for generating heat to be radiated by the radiator unit and a defrost mode for removing frost formed on the heat pump; and a system control unit configured to control the heat pump control unit. The system control unit includes: an obtaining unit configured to obtain, from the power supply source, an output modulation instruction specifying an output modulation period during which power consumption by the heat pump is modulated; a prediction unit configured to, when the output modulation instruction is obtained by the obtaining unit, predict a state of the heat pump in a given period including the output modulation period; an advance defrost determination unit configured to determine whether the state of the heat pump predicted by the prediction unit satisfies a first condition indicating that switching a mode of operation of the heat pump to the defrost mode is required; and an instruction unit configured to make a notification to switch the mode of operation of the heat pump to the defrost mode before a start time of the output modulation period when it is determined by the advance defrost determination unit that the state of the heat pump in the given period satisfies the first condition.

Hereinafter, certain exemplary embodiments are described in greater detail with reference to the accompanying Drawings. Each of the exemplary embodiments described below shows a general or specific example. The numerical values, shapes, materials, structural elements, the arrangement and connection of the structural elements, steps, the processing order of the steps etc. shown in the following exemplary embodiment are mere examples, and therefore do not limit the present disclosure. It should be noted that the present invention is specified based on the recitation of the Claims. Therefore, among the structural elements in the following exemplary embodiments, structural elements not recited in any one of the independent claims defining the most generic part of the inventive concept are described as arbitrary structural elements.

### (First Embodiment)

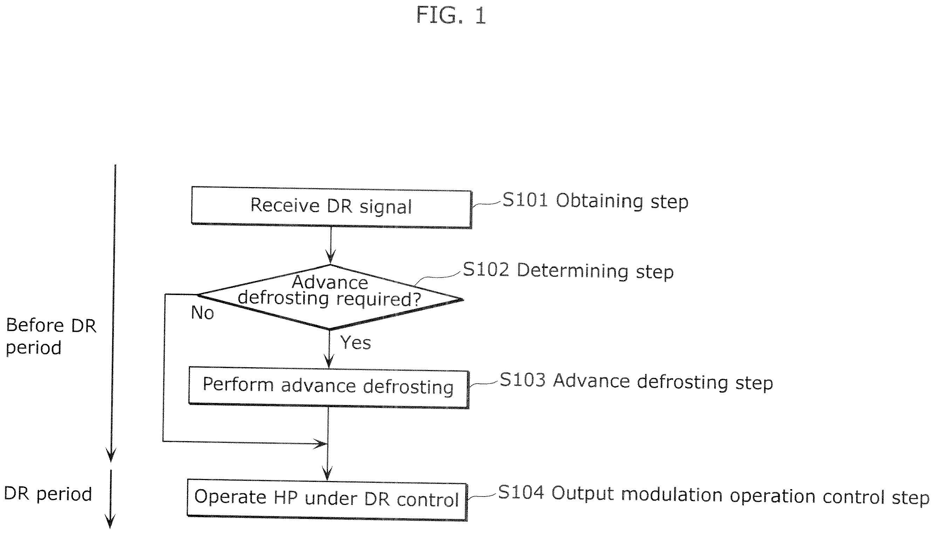

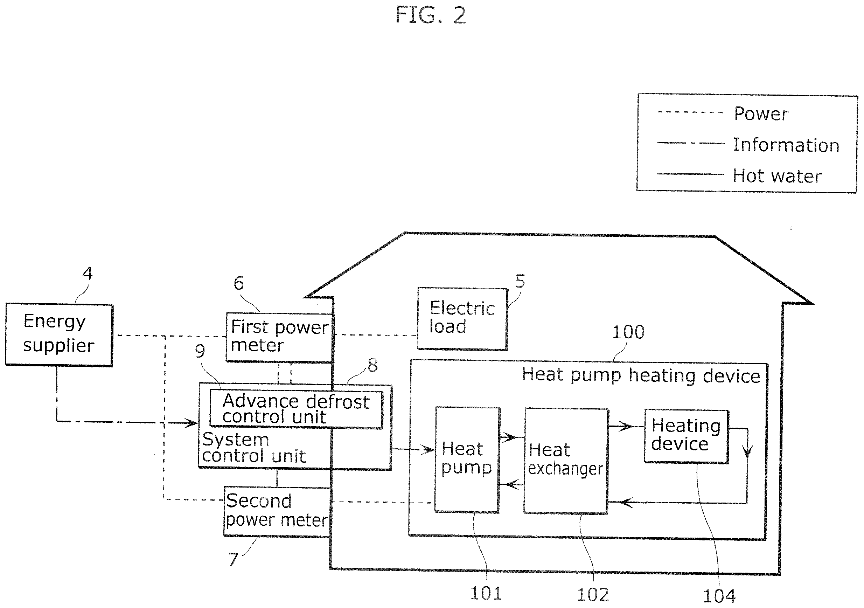

First, the heat pump heating system control method according to the first embodiment of the present invention will be outlined with reference to FIG. 1. FIG. 1 is a flow chart outlining the control processes performed by heat pump heating system according to the first embodiment. As FIG. 2 shows, the heat pump heating system 1 includes a heat pump heating device 100 and a system control unit 8.

As FIG. 1 shows, the heat pump heating system according to the first embodiment first receives an output modulation signal (hereinafter also referred to as a demand response (DR) signal) for the high electricity cost time period from the energy supplier (S101). The DR signal includes information specifying an output modulation period (hereinafter also referred to as a DR period) which is a time period during which power consumption by the heat pump is reduced.

The output modulation period is a period arbitrarily designated by the energy supplier. The output modulation period can be, for example, a peak power supply period of the energy supplier, such as a two hour period from 18:00 to 20:00. Moreover, the heat pump heating system receives the DR signal before the DR period start time (for example, at 17:30).

Next, the heat pump heating system predicts future changes in the air heat exchanger surface temperature (or the temperature of the refrigerant flowing into the air heat exchanger) before the DR period start time using predicted values of the DR period outside temperature, outside humidity, and heat pump output, predicts a time at which defrosting is to be performed, and determines the necessity of advance defrosting from the relationship between the DR period and the predicted time at which defrosting is to be performed (S102). Next, when the heat pump heating system determines that advance defrosting is required (yes in S102), the heat pump heating system performs defrosting before the start of the DR period (S103). It should be noted that the timing of determining whether advance defrosting is required or not is determined according to the amount of time required to defrost the heat exchanger. Moreover, when the heat pump heating system does not determine that defrosting in advance is required (no in S102), the heat pump is made to operate normally, without performing the advance defrosting. Here, normal heat pump operation refers to operation under control by the HP control unit 103 (to be described later), and not operation under control by the system control unit 8.

Lastly, the heat pump heating system switches the operation conditions of the heat pump at the start time of the DR period and operates the heat pump under the DR period operation conditions from the start of the DR period to the end of the DR period (S104). The DR period operation conditions are, for example, operation conditions that cause the heat pump to generate an amount of heat per unit time (second amount of heat: 2 kW, for example) that is less than an amount of heat generated per unit time by the heat pump in a period other than the DR period (first amount of heat: 4 kW, for example). Here, the second amount of heat is half the normal rated power (4 kW) or less (2 kW, for example).

In this way, when the heat pump heating system predicts that defrosting during the DR period is likely to be required, it is possible to avoid operating in the high power-consuming defrost mode during the DR period by performing the defrosting operation in advance. As a result, advantageous effects of the DR period heat pump control can be achieved, such as the reduction in power consumption sought by the energy supplier, savings for electricity consumers, and the preservation of user comfort.

FIG. 2 shows the heat pump heating system 1 according to the first embodiment. As FIG. 2 shows, the heat pump heating system 1 includes the heat pump heating device 100 and the system control unit 8.

In the example shown in FIG. 2, power is delivered to a home (building) from an energy supplier (power supply source) 4 via a first and second power grid. The first power grid is a power grid that provides a stable supply of power. Moreover, the first power grid is a power grid having a relatively high electrical utility rate, and the amount of power consumed from the first power grid is measured by a first power meter 6. On the other hand, the second power grid is a power grid through which the energy supplier 4 can reduce the supply of power for a given time period. Moreover, the second power grid is a power grid having an electrical utility rate that is lower than that of the first power grid, and the amount of power consumed from the second power grid is measured by a second power meter 7.

Moreover, an electric load 5, a heating system control unit 8, and a heat pump heating device 100 are installed inside the home shown in FIG. 2. The heat pump heating device 100 includes at least a heat pump (heat generation unit) 101, a heat exchanger 102, and a heating device (radiator unit) 104.

The heat pump heating device 100 is a device which, by radiating the heat generated by the heat pump 101 from the heating device 104 via the heat exchanger 102, maintains the temperature of a room equipped with the heating device 104 to within a predetermined temperature range including a predetermined set temperature.

The first power meter 6 measures the power consumption of electronic devices (that is, an electric load 5 and a heating system control unit 8) other than the heat pump heating device 100. In other words, the heating system control unit 8 and the electric load 5 operate off power supplied from the energy supplier 4 via the first power grid. On the other hand, the second power meter 7 measures the power consumption of components of the heat pump heating device 100, such as the compressor, pump, and fan (not shown in the Drawings). In other words, the components of the heat pump heating device 100 operate off power supplied from the energy supplier 4 via the second power grid.

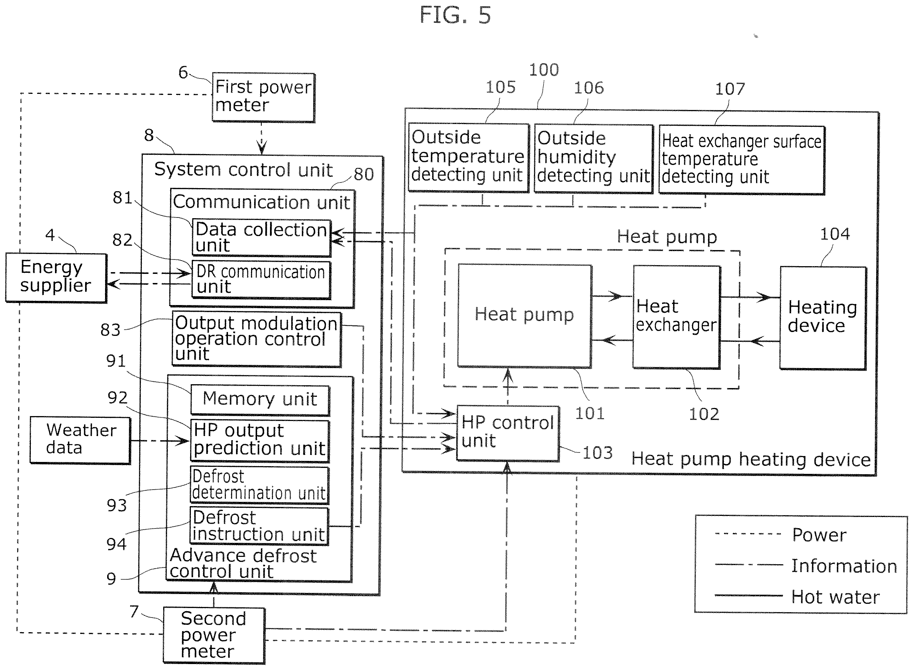

The heating system control unit 8 is functionally capable of communicating with the energy supplier 4 and administering control commands to the heat pump heating device 100. For example, the heating system control unit 8 includes an output modulation operation control unit 83 (shown in FIG. 5) and controls operation of the heat pump heating device 100 to modulate power consumption by the heat pump 101 during the DR period.

The energy supplier 4 is a company which delivers electricity or gas to individual homes and, when the energy supplier 4 wishes to modulate the use of power by a given home, can reduce the consumption of power supplied to the individual homes via the second power grid by transmitting a DR signal.

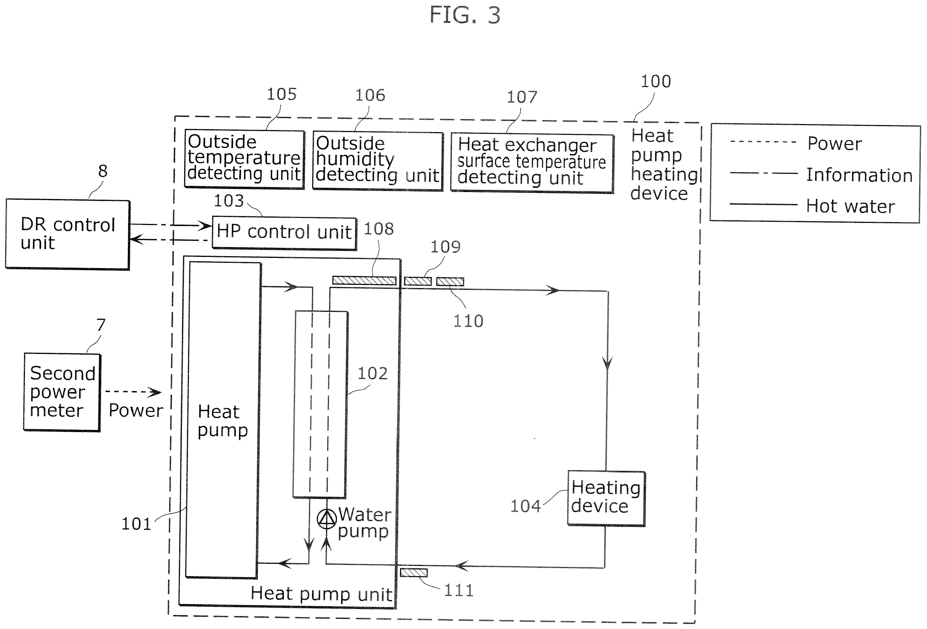

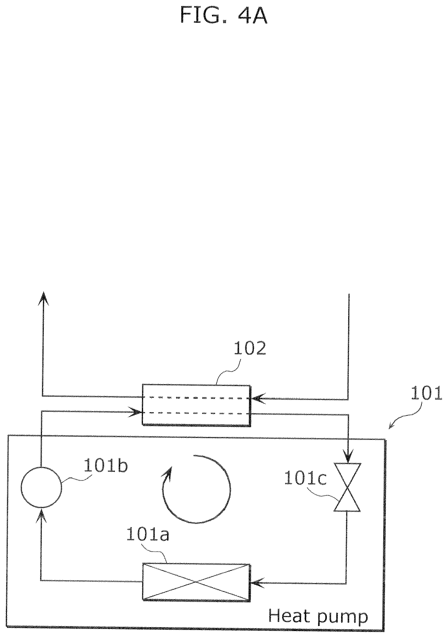

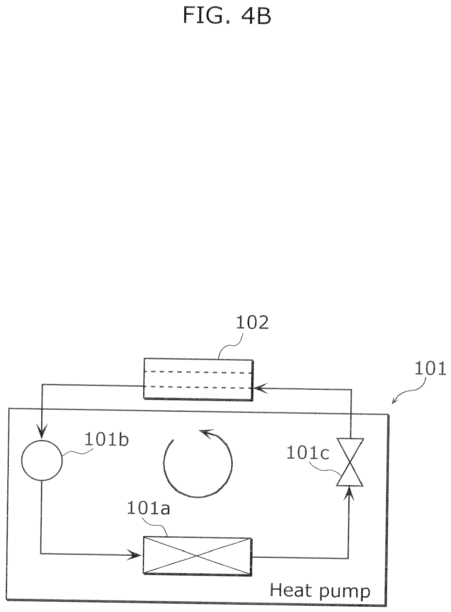

FIG. 3 is a block diagram showing the heat pump heating device 100 according to the first embodiment in detail. FIG. 4A and FIG. 4B show the configuration of the heat pump 101 in detail.

The heat pump heating device 100 shown in FIG. 3 includes the heat pump 101, the heat exchanger 102, the heating device 104, the HP control unit 103, an outside temperature detecting unit 105, an outside humidity detecting unit 106, a heat exchanger surface temperature detecting unit 107, a heater 108, an outlet heated water temperature detecting unit 109, a flow rate detecting unit 110, and an inlet water temperature detecting unit 111. Moreover, the combination of the heat pump 101 and the heat exchanger 102 is referred to as the heat pump unit.

The heat pump 101 is an air-source heat pump which compresses a refrigerant into a high temperature-high pressure state. More specifically, as is shown in FIG. 4A, the heat pump 101 includes the heat exchanger (air heat exchanger) 101a which facilitates heat exchange between outside air and low temperature, low pressure liquid refrigerant to generate a low temperature, low pressure vaporized refrigerant, a motor-driven compressor 101b which compresses the low temperature, low pressure vaporized refrigerant into a high temperature, high pressure vaporized refrigerant, an expansion valve 101c which reduces the pressure of the low temperature, high pressure vaporized refrigerant to generate a low temperature, low pressure liquid refrigerant, and a fan (not shown in the Drawings) to accelerate the heat conversion between the refrigerant in the evaporator and the outside air, for example.

The high temperature, high pressure vaporized refrigerant output from the compressor 101b transfers heat in the heat exchanger 102 between water (thermal storage medium) and enters the expansion valve 101c as a low temperature, high pressure liquid refrigerant. In other words, the refrigerant in the heat pump 101 circulates through the heat pump cycle shown in FIG. 4A in a clock-wise direction. The refrigerant in the heat pump 101 is, for example, R-410A. As a result of a property of this refrigerant, the temperature at the exit of the water cycle of the heat exchanger 102 peaks at 55 degrees Celsius, so the upper temperature limit of the heating temperature setting is set to 55 degrees Celsius.

The heat exchanger (water heat exchanger) 102 facilitates heat exchange between the high temperature, high pressure refrigerant exiting the heat pump 101 and the secondary side of the water cycle filled with water (that is, the water cycling between the heat exchanger 102 and the heating device 104). Moreover, as FIG. 3 shows, a water pump is provided along the channel in which water flows from the heating device 104 to the heat exchanger 102. The water pump adjusts the amount of water flowing into the heat exchanger 102.

The heating device 104 is a device for heating the inside of a home, such as a radiator or floor heater which radiates heat energy in a room via a radiator panel, or an air conditioner which blows hot air heated by the heat exchanger 102. It should be noted that a specific example of the heating device 104 is not limited to these examples, but corresponds to any device having a radiator unit which radiates heat generated by the heat pump 101 to a target.

The outside temperature detecting unit 105 detects the outside temperature, and more specifically, detects the outside temperature in the vicinity in which the heat pump heating device 100 is installed. The outside humidity detecting unit 106 detects the outside humidity, and more specifically, detects the outside humidity in the vicinity in which the heat pump heating device 100 is installed. The heat exchanger surface temperature detecting unit 107 detects the surface temperature of the heat exchanger 101a. Moreover, the heat pump heating device 100 may include a refrigerant temperature detecting unit (not shown in the Drawings) for detecting the temperature of the refrigerant circulating in the heat pump 101.

It should be noted that the outside temperature detecting unit 105, the outside humidity detecting unit 106, the heat exchanger surface temperature detecting unit 107, and the refrigerant temperature detecting unit are not intended to be limited to a specific configuration. For example, a general configuration which can measure temperature may be chosen to suit the target to be measured. Examples include a thermocouple, a resistance thermometer, a thermistor, and a bimetallic thermometer.

The HP control unit 103 controls the generation of heat by controlling the compressor 101b and the expansion valve 101c in the heat pump 101. The HP control unit 103 can operate the heat pump 101 in a heating mode, a defrost mode, or an output modulation mode.

The heating mode is a mode of operation for generating heat to be radiated by the heating device 104, and is ran by circulating the refrigerant in the heat pump 101 as is shown in FIG. 4A. More specifically, during normal operation (a time period other than the DR period), the HP control unit 103 set to the heating mode, for example, controls operation of the heat pump 101 according to operation conditions set by the user. On the other hand, during the DR period, instructions from the heating system control unit 8 have priority, and the HP control unit 103 controls operation of the heat pump 101 in accordance with these instructions.

The defrost mode is a mode of operation for removing frost build-up on the surface of the heat exchanger 101a, and is ran by circulating the refrigerant in the heat pump 101 as is shown in FIG. 4B (in a direction opposite that of FIG. 4A). In other words, frost can be melted from the surface of the heat exchanger 101a by supplying the high temperature, high pressure vaporized refrigerant generated by the compressor 101b to the heat exchanger 101a.

It should be noted that the method of operating the heat pump 101 in the defrost mode is not limited to the example shown in FIG. 4B. For example, since it is possible to supply the high pressure refrigerant to the heat exchanger 101a by circulating the refrigerant in the direction shown in FIG. 4A and decreasing the expansion rate in the expansion valve 101c to a value lower than that in the heating mode, frost can be melted off.

The output modulation mode is a mode of operation of the heat pump 101 used during the DR period that reduces the output of the heat pump 101 to a value lower than that of the heating mode. For example, the heat pump 101 in the heating mode operates at normal rated power (generates a first amount of heat per unit time), while the heat pump 101 in the output modulation mode operates at half the normal rated power or less (generates a second amount of heat per unit time).

Moreover, the HP control unit 103 determines the switching between the heating mode and the defrost mode using the outside temperature measured by the outside temperature detecting unit 105 and the heat exchanger surface temperature measured by the heat exchanger surface temperature detecting unit 107. The HP control unit 103 according to the first embodiment switches the heat pump 101 mode of operation from the heating mode to the defrost mode when the outside temperature is 5 degrees Celsius or less and the surface temperature of the heat exchanger is -10 degrees Celsius or less (first condition or defrost condition). On the other hand, the HP control unit 103 switches the heat pump 101 mode of operation from the defrost mode to the heating mode when the surface temperature of the heat exchanger is 10 degrees Celsius or more (second condition or defrost complete condition).

Moreover, the HP control unit 103 receives a defrost instruction notice from an advance defrost control unit 9 located in the system control unit 8, to be described later. When the HP control unit 103 receives the defrost instruction notice, it switches the heat pump 101 mode of operation from the heating mode to the defrost mode in accordance with the instructions from the system control unit 8 (in other words, in accordance with the information in the defrost instruction notice).

Moreover, the HP control unit 103 notifies a data collection unit 81 located in the system control unit 8 of the current mode of operation. The timing of the notification is not particularly limited, and may be performed, for example, at a point in time at which the mode of operation is switched, at a point in time at which the notification is requested from the system control unit 8, or at a predetermined point in time (for example, every day at 00:00).

Moreover, the HP control unit 103 may calculate and transmit to the system control unit 8 the output of the heat pump 101 by multiplying (i) a difference between the temperature of the hot water output from the heat exchanger 102 measured by the outlet heated water temperature detecting unit 109 shown in FIG. 3 (outlet heated water temperature) and the temperature of the water input into the heat exchanger 102 measured by the inlet water temperature detecting unit 111 (inlet water temperature) by (ii) a flow rate measured by the flow rate detecting unit 110 in the channel between the heat exchanger 102 and the heating device 104.

The heater 108 is capable of further heating the heated water exiting the heat exchanger 102, and as FIG. 3 shows, is installed along the channel in which water flows from the heat exchanger 102 to the heating device 104. The heater 108 is not intended to be limited to a specific configuration. For example, the heater 109 may be an electrically-heated wire.

With the heat pump heating device 100 having the above configuration, the outlet heated water temperature, which is the temperature of the heated water exiting the heat exchanger 102, is set by the user, and operation conditions for the heat pump 101 are determined in order to achieve this set outlet heated water temperature. However, the heat pump 101 requires some time to reach a stable amount of generated heat after being turned on, and has trouble keeping up with the large settings changes in real time.

For this reason, when the outlet heated water temperature detected by the outlet heated water temperature detecting unit 109 (the measured outlet heated water temperature) is less than the temperature set by the user (the set outlet heated water temperature), the heater 108 adds heats to approximate the measured outlet heated water temperature of heated water exiting the heat exchanger 102 to the set outlet heated water temperature.

Moreover, when the heat pump 101 mode is operating in the defrost mode, the outlet heated water temperature as well as the room temperature decrease since the heat pump 101 circuit is switched to defrosting. As such, the heater 108 can heat the heated water output from the heat exchanger 102 while the heat pump 101 is operating in the defrost mode to prevent a loss of user comfort.

FIG. 5 is a block diagram showing the system control unit 8 of the heat pump heating system according to the first embodiment in detail. The system control unit 8 shown in FIG. 5 includes a communication unit 80 which includes a data collection unit 81 and a DR communication unit 82, the output modulation operation control unit 83, and the advance defrost control unit 9.

It should be noted that the system control unit 8 shown in FIG. 2 and FIG. 5 is configured to be structurally separate from the heat pump heating device 100. However, the present invention is not limited to this configuration. In other words, the system control unit 8 may be configured to be combined with the heat pump heating device 100. In this case, the system control unit 8 may be positioned next to the HP control unit 103 within the heat pump heating device 100.

The data collection unit 81 collects various data, such as the various temperatures and the like detected by the outside temperature detecting unit 105, the outside humidity detecting unit 106, and the heat exchanger surface temperature detecting unit 107, the various power consumption amounts measured by the first and second power meters 6 and 7, as well as the output of the heat pump 101 calculated by the HP control unit 103. The data collection unit 81 then stores the collected data in a memory unit 91 of the advance defrost control unit 9 to be described later. Moreover, the data collection unit 81 receives a notice of the current heat pump 101 mode of operation from the HP control unit 103.

The DR communication unit 82 receives the DR signal from the energy supplier 4. Moreover, the DR communication unit 82 notifies the energy supplier 4 of the modulation and restarting of the supply of power to the heat pump heating device 100 via the second power grid. It should be noted that the DR communication unit 82 may communicate with the energy supplier 4 via power line communication (PLC), or may communicate with the energy supplier 4 via a different method, such as the internet. Moreover, the DR communication unit 82 notifies the advance defrost control unit 9 as well with the DR signal.

The DR signal is transmitted from the energy supplier 4 prior to the start of the DR period for modulating power use by each home (from 0.5 to 12 hours in advance, for example). In this case, information specifying the DR period start time and end time is included in the DR signal. In the first embodiment, the information is "DR period start time: 18:00; DR period end time: 20:00".

Here, "information specifying the DR period start time and end time" is not limited to a specific example, and may be information specifying actual start and end times (such as "DR period start time: 18:00; DR period end time: 20:00") or information indicating the start time and length of the DR period (such as "DR period start time: 18:00; DR period length: 2 hours").

The output modulation operation control unit 83 switches the operation of the HP control unit 103 between DR period operation and non-DR period operation. In other words, in a time period that is not the DR period, the output modulation operation control unit 83 causes the HP control unit 103 to control the operation of the heat pump heating device 100 to achieve the outlet heated water temperature set by the user. On the other hand, when the DR communication unit 82 receives the DR signal, the output modulation operation control unit 83 determines operation conditions for the operation of the heat pump heating device 100 during the DR period, and causes the HP control unit 103 to control the operation of the heat pump heating device 100 according to the determined operation conditions. In this case, the instructions from the system control unit 8 (the output modulation operation control unit 83) have priority over the HP control unit 103.

These operation conditions include, for example, the temperature (outlet heated water temperature) setting of the hot water output from the heat exchanger 102 and the operating state of the heater 108. The output modulation operation control unit 83 determines the DR period outlet heated water temperature for the heat pump 101 that, for example, make the heat pump 101 generate an amount of heat (the second amount of heat) that is less than the amount of heat generated per unit time by the heat pump 101 in a period other than the DR period (the first amount of heat).

More specifically, the output modulation operation control unit 83, for example, changes the outlet heated water temperature of the heat exchanger 102 from the first temperature setting (55 degrees Celsius, for example) to the second temperature setting that is lower than the first temperature (41 degrees Celsius, for example) to decrease the amount of heat generated per unit time by the heat pump 101 from the first amount of heat to the second amount of heat. Moreover, in order to reduce power consumption, the output modulation operation control unit 83 modulates (or prohibits) operation of the heater 108. Here, the heated water exiting the heat exchanger 102 (heated water output) is assumed to a constant amount. Processes for determining these operation conditions are performed, for example, when the DR signal is received by the DR communication unit 82 from the energy supplier 4, but the process of determination is not limited to this.

The advance defrost control unit 9 refers to the DR period start time included in the DR signal received by the DR communication unit 82, predicts a future heat exchanger surface temperature, and, using the prediction result, determines the necessity of performing defrosting before the DR period start time (hereinafter also referred to as advance defrosting). When the advance defrost control unit 9 determines that advance defrosting is required, the advance defrost control unit 9 then notifies the HP control unit 103 with a defrost instruction. The advance defrost control unit 9 includes the memory unit 91, an HP output prediction unit 92, a defrost determination unit 93, and a defrost instruction unit 94.

The memory unit 91 stores a variety of information necessary for the operation of the advance defrost control unit 9. For example, the memory unit 91 stores past records of the heat pump 101 output collected by the data collection unit 81, mathematical parameters for predicting future output values of the heat pump 101 (to be described later), and a heat exchanger surface temperature prediction table. Details regarding the various data stored in the memory unit 91 will be described later.

The HP output prediction unit 92 calculates predicted values of the heat pump 101 output from the current time to the end of the DR period, using weather data including forecasted outside temperatures and forecasted outside humidities from the internet, and past records of the outside temperature and the heat pump 101 output stored in the memory unit 91.

The defrost determination unit 93 predicts a heat exchanger surface temperature for each unit time from the current time using the weather data and the predicted values of the heat pump 101 output predicted by the HP output prediction unit 92, and then determines whether the heat exchanger surface temperature at each future point in time satisfies the defrost condition (outside temperature is 5 degrees Celsius or below, heat exchanger surface temperature is -10 degrees Celsius or below).

Then, when the future point in time that satisfies the defrost condition is before the end of the DR period, the defrost determination unit 93 determines advance defrosting to be necessary, and ends the predicting of the heat exchanger surface temperature. Moreover, when no future point in time satisfies the defrost condition before the end of the DR period, the defrost determination unit 93 determines advance defrosting to be unnecessary, and ends the predicting of the heat exchanger surface temperature.

When the defrost determination unit 93 determines that advance defrosting is required, the defrost instruction unit 94 transmits a defrost instruction notice to the HP control unit 103 located in the heat pump heating device 100.

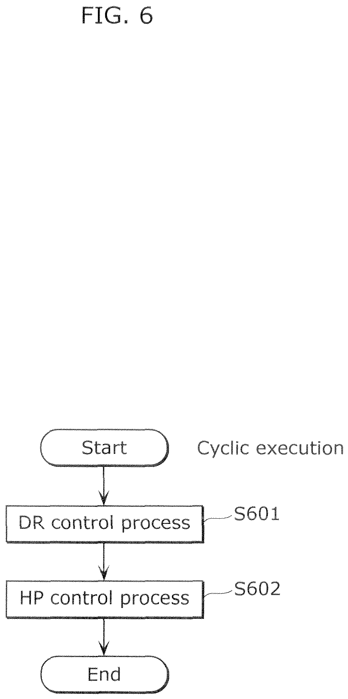

Next, the control method of the heat pump heating system according to the first embodiment will be explained with reference to FIG. 6 through FIG. 9.

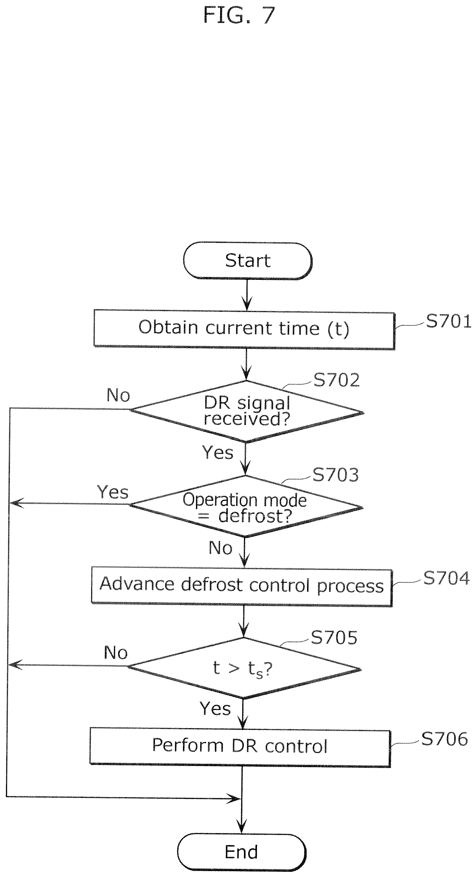

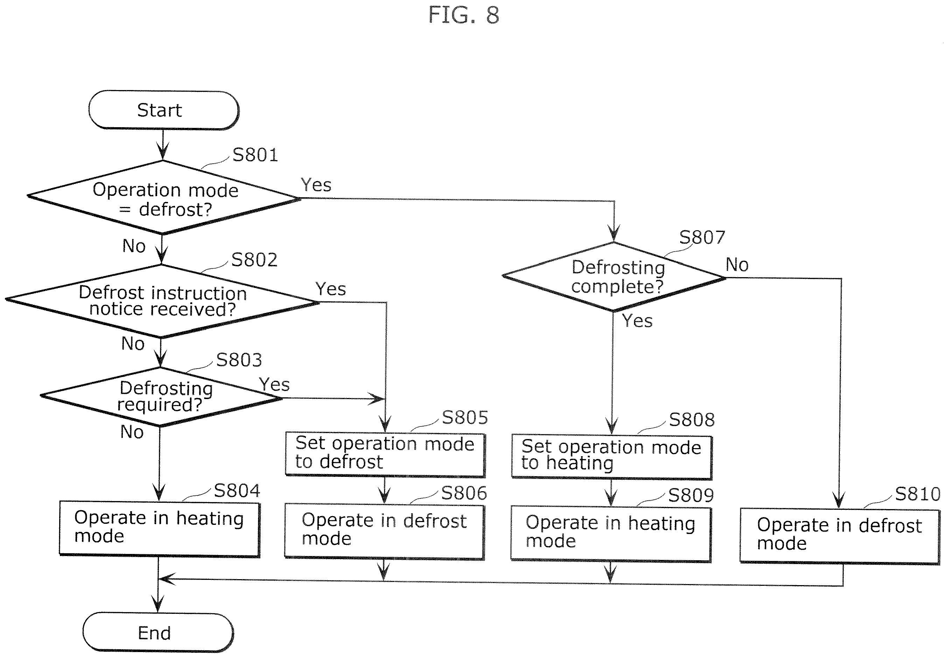

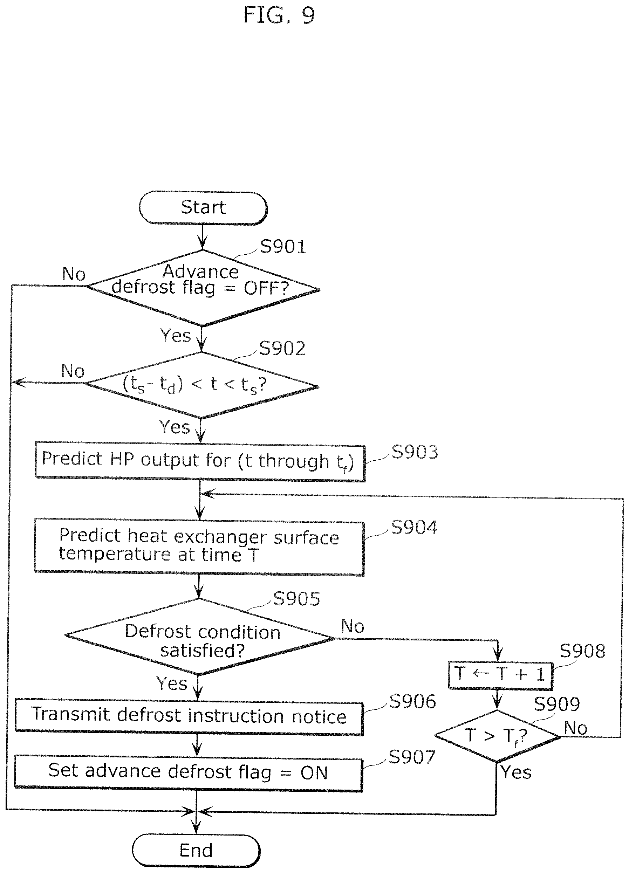

FIG. 6 is a flow chart outlining the control processes performed by heat pump heating system according to the first embodiment. FIG. 7 is a flow chart of the DR control process shown in FIG. 6 (S601 in FIG. 6). FIG. 8 is a flow chart of the HP control process shown in FIG. 6 (S602 in FIG. 6). FIG. 9 is a flow chart of the advance defrost control process shown in FIG. 7 (S704 in FIG. 7).

First, FIG. 6 and FIG. 7 will be explained. As FIG. 6 shows, the heat pump control process performs the DR control process (S601) and the HP control process (S602) cyclically (for example, every minute). First, the system control unit 8 performs the DR control process (S601). Once the DR control process is complete, the HP control unit 103 performs the HP control process (S602).

FIG. 7 shows the DR control process shown in FIG. 6 (S601) in detail. The system control unit 8 first obtains the current time t (S701). Next, the system control unit 8 determines whether the DR signal from the energy supplier 4 has been received by the DR communication unit 82 (S702). When the DR signal has not been received (no in S702), the system control unit 8 ends the DR control process.

When the DR signal has already been received by the DR communication unit 82 (yes in S702), the data collection unit 81 refers to the current mode of operation transmitted from the HP control unit 103 (S703). When the current mode of operation is the defrost mode (yes in S703), the system control unit 8 ends the DR control process.

On the other hand, when the current mode of operation is not the defrost mode (no in S703), the system control unit 8 causes the advance defrost control unit 9 to perform an advance defrost control process (to be described later) (S704). In the advance defrost control process, the advance defrost control unit 9 predicts a future point in time at which defrosting will be performed, and determines whether defrosting before the start of the DR period (advance defrosting) is required. When the advance defrost control unit 9 determines that advance defrosting is required, the advance defrost control unit 9 transmits the defrost instruction notice to the HP control unit 103. When the advance defrost control unit 9 determines that advance frosting is not required, the heat pump 101 continues operation as per instruction by the HP control unit 103, without performing the advance defrosting (in other words, the defrost instruction notice is not transmitted).

When the advance defrost control process is complete, the data collection unit 81 determines whether the obtained current time t is past the DR period start time ts or not (S705). When the current time t is not past the DR period start time ts (no in S705), the system control unit 8 ends the DR control process. On the other hand, when the current time t is past the DR period start time (yes in S705), by causing the output modulation operation control unit 83 to perform the DR control, the system control unit 8 transmits a signal to the HP control unit 103 for changing the outlet heated water temperature of the heat exchanger 102 from the current 55 degrees Celsius (first temperature setting) to 41 degrees Celsius (second temperature setting) (in other words, a signal which switches the mode of operation from the heating mode to the output modulation mode) (S706). Afterward, the system control unit 8 ends the DR control process.

FIG. 8 shows the HP control process shown in FIG. 6 (S602) in detail. The HP control unit 103 first confirms whether the heat pump 101 current mode of operation is the defrost mode or not (S801).

When the current mode of operation is not the defrost mode (no in S801), this means that the heat pump 101 is already operating in the heating mode (heating operation). In this case, the HP control unit 103 confirms whether it has received the defrost instruction notice from the defrost instruction unit 94 located in the system control unit 8 or not (S802).

When the HP control unit 103 has not received the defrost instruction notice (no in S802), the HP control unit 103 refers to the outside temperature measured by the outside temperature detecting unit 105 and the surface temperature of the heat exchanger measured by the heat exchanger surface temperature detecting unit 107, and determines whether the current state satisfies the defrost condition or not (S803). It should be noted that the defrost condition according to the first embodiment is, for example, that the outside temperature is 5 degrees Celsius or less and the heat exchanger surface temperature is -10 degrees Celsius or less.

When the current state satisfies the defrost condition (yes in S803), the HP control unit 103 sets the heat pump 101 mode of operation to the defrost mode (S805) and operates the heat pump 101 in the defrost mode (S806). On the other hand, when the current state does not satisfy the defrost condition (no in S803), the HP control unit 103 continues operating the heat pump 101 in the heating mode (S804).

Moreover, when the HP control unit 103 has received the defrost instruction notice (yes in S802), the HP control unit 103 sets the heat pump 101 mode of operation to the defrost mode (S805) and operates the heat pump 101 in the defrost mode (S806).

However, when the current mode of operation is the defrost mode (yes in S801), this means that the heat pump 101 is already operating in the defrost mode (is defrosting). In this case, the HP control unit 103 refers to the heat exchanger surface temperature measured by the heat exchanger surface temperature detecting unit 107 and determines whether or not the surface temperature satisfies the defrost complete condition (S807). The defrost complete condition according to the first embodiment is, for example, that the heat exchanger surface temperature is 10 degrees Celsius or higher.

When the defrost complete condition is satisfied (yes in S807), the HP control unit 103 sets the heat pump 101 mode of operation to the heating mode (S808) and operates the heat pump 101 in the heating mode (S809). On the other hand, when the defrost complete condition is not satisfied (no in S807), the HP control unit 103 continues operating the heat pump 101 in the defrost mode (S810).

This completes the processes shown in FIG. 6. The processes are repeated after a given amount of time has elapsed.

Next, the advance defrost control process shown in FIG. 9 will be described. As previously described, the system control unit 8 causes the advance defrost control unit 9 to perform the advance defrost control process shown in step S704 in FIG. 7.

First, the advance defrost control unit 9 confirms the set value of the advance defrost flag (S901). The advance defrost flag indicates whether advance defrosting was performed or not between the time the DR signal was received and the current time (in other words, whether the defrost instruction notice was sent in step S906 or not). More specifically, the advance defrost flag is set to ON when advance defrosting has been performed, and set to OFF when advance defrosting has yet to be performed.

When the advance defrost flag is set to ON (no in S901), the advance defrost control unit 9 ends the advance defrost control process. However, when the advance defrost flag is set to OFF, the advance defrost control unit 9 determines whether or not the current time t is past the advance defrost start time (ts - td) and before the DR period start time ts (S902).

The advance defrost start time (ts - td) is a point in time calculated by subtracting an amount of time td required for defrosting from the DR period start time ts. In the heat pump heating system according to the first embodiment, since the amount of time required for defrosting is 15 minutes, the advance defrost start time (ts - td) is set, with some allowance, to be 20 minutes before the DR period start time (in other words, td = 20 minutes).

Moreover, in the first embodiment, since the start DR period start time ts is 18:00, the advance defrost start time (ts - td) is set to be 17:40. When the current time t is not past the advance defrost start time (ts - td) or is past the DR period start time ts (no in S902), the advance defrost control unit 9 ends the advance defrost control process.

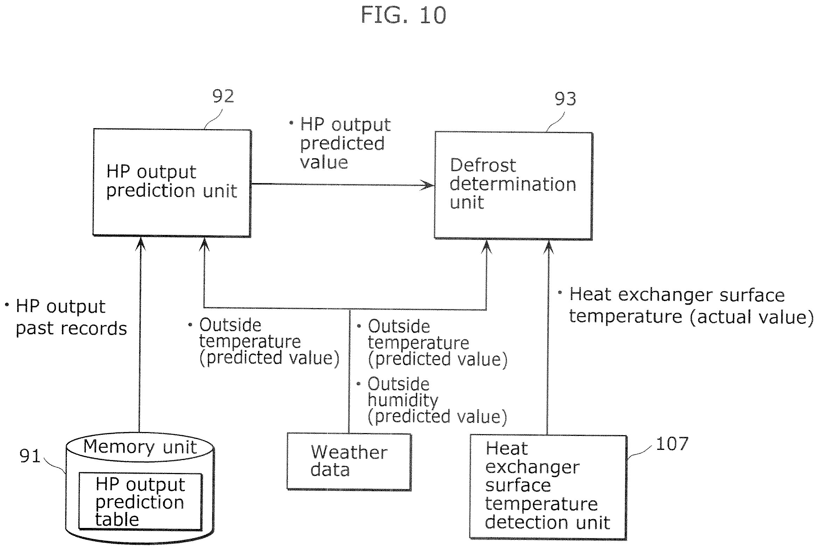

On the other hand, when the current time t is past the advance defrost start time (ts - td) and is before the DR period start time ts (yes in S902), the advance defrost control unit 9 predicts the state of the heat pump 101 for a given period of time including the DR period (S903, S904), and then determines whether the state of the heat pump 101 obtained in the predicting satisfies the defrost condition or not (S905). Next, details regarding the processes in steps S903 through S905 shown in FIG. 9 will be described with reference to FIG. 10 through 13B. First, FIG. 10 shows an example of the information transmitted between each structural element.

As FIG. 10 shows, the HP output prediction unit 92 obtains, from the weather data, the forecasted outside temperature values (outside temperature and outside humidity) for the time period in which the heat pump 101 output is predicted. The HP output prediction unit 92 then obtains, from the HP output prediction table, past records of the heat pump 101 output values which correspond to the obtained forecasted outside temperature values.

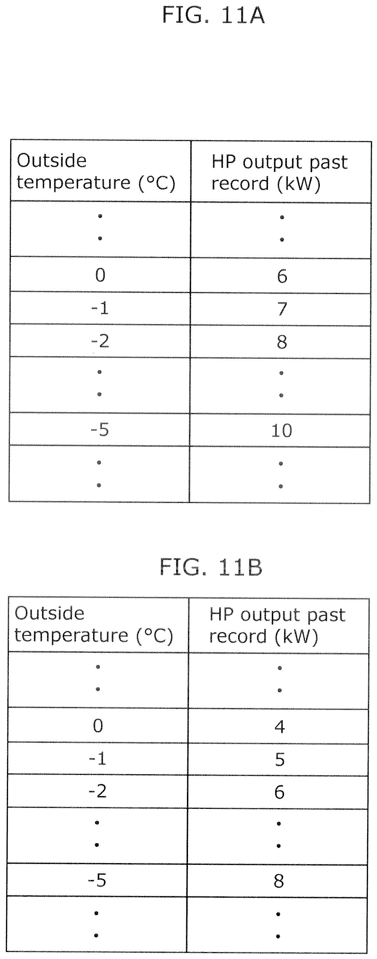

FIG. 11A and FIG. 11B show an example of the HP output prediction table. As FIG. 11A and FIG. 11B show, the HP output prediction table holds rounded off outside temperatures of past outside temperatures in one degree Celsius intervals and average past record output values of the heat pump 101 for each of the corresponding outside temperatures. The HP output prediction table is stored in advance in the memory unit 91.

In other words, the second record of the HP output prediction table shown in FIG. 11A shows that the average output of the heat pump 101 in the past when the outside temperature was 0 is 6 kW. Other records show the same kind of data.

It should be noted that the average past record output values of the heat pump 101 obtained during a time period outside of the DR period (FIG. 11A) and those obtained during the DR period (FIG. 11B) are stored separately in the memory unit 91. In other words, since output of the heat pump 101 is modulated in the DR period, the average past record output values of the heat pump 101 shown in FIG. 11B are smaller than those corresponding to the same outside temperature in FIG. 11A.

Next, the HP output prediction unit 92 extracts, from the HP output prediction table, the average past record output value of the heat pump 101 corresponding to the same outside temperature as the forecasted outside temperature for the time for which the output of the heat pump 101 is being predicted. With the above-described method, the HP output prediction unit 92 then extracts the average past record output value of the heat pump 101 for each unit time (for example, every minute) in a given period (in the first embodiment, the given period is from the advance defrost start time (ts - td) to the end of the DR period tf) including the DR period, and then outputs the extracted value as the heat pump 101 output predicted value (labeled as the "HP output predicted value" in FIG. 10) to the defrost determination unit 93.

Next, as FIG. 10 shows, the defrost determination unit 93 obtains, from the HP output prediction unit 92, the predicted heat pump 101 output values corresponding to the given period which includes in the DR period, obtains, from the heat exchanger surface temperature detecting unit 107, the current heat exchanger 101a surface temperature, and obtains, from the weather data, the forecasted outside temperature and outside humidity for the point in time T (t ≤ T ≤ tf). It should be noted that the initial point in time T is the current time t.

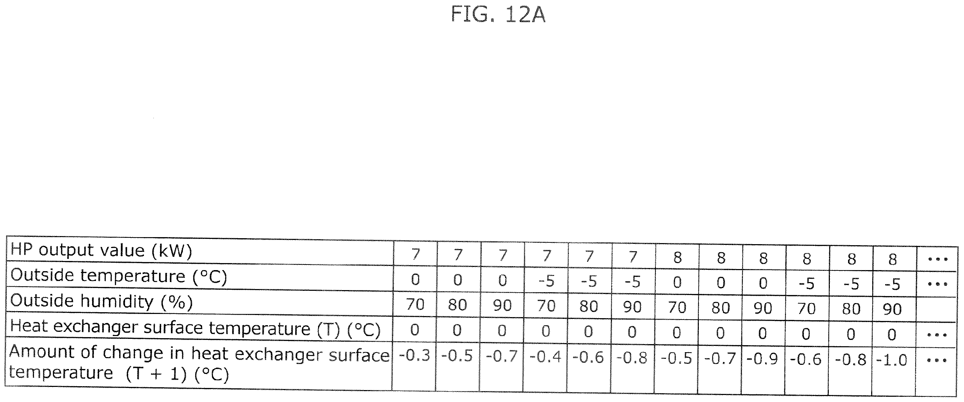

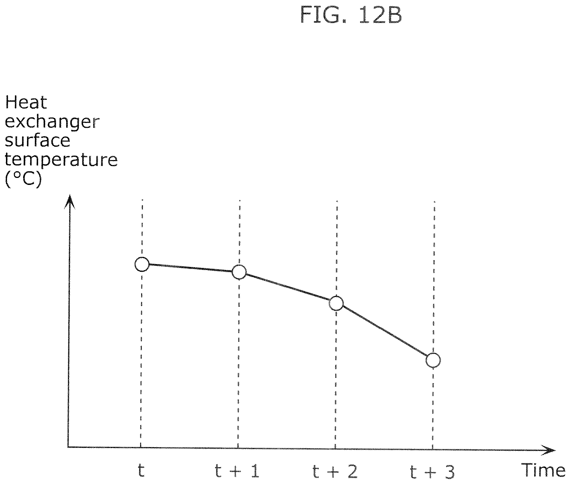

The defrost determination unit 93 then, based on the various data obtained and the heat exchanger surface temperature prediction table shown in FIG. 12A, predicts the heat exchanger 101a surface temperature at the point in time T + 1 (for example, one minute after the point in time T), as FIG. 12B shows.

The prediction of the heat exchanger surface temperature by the defrost determination unit 93 will be described with reference to FIG. 12A and FIG. 12B. FIG. 12A is a heat exchanger surface temperature prediction table that is stored in advance in the memory unit 91. The heat exchanger surface temperature prediction table holds calculated amounts of variation in heat exchanger surface temperature that occur when, at a given state of the heat exchanger surface temperature at the point in time T, operation is continued until a point in time (T + 1) under certain HP output, outside temperature, and outside humidity values.

More specifically, in the heat exchanger surface temperature prediction table shown in FIG. 12A, an HP output value at the point in time (T + 1), an outside temperature at the point in time (T + 1), an outside humidity at the point in time (T + 1), a heat exchanger surface temperature at the point in time T, and an amount of variation in the heat exchanger surface temperature from the point in time T to the point in time (T + 1) are held in association.

When the point in time for which the heat exchanger surface temperature is to be calculated is (T + 1), the defrost determination unit 93 reads out, from the heat exchanger surface temperature prediction table, the amount of variation in heat exchanger surface temperature that corresponds with the forecasted outside temperature and humidity at the point in time (T + 1), the predicted HP output at the point in time (T + 1), and the heat exchanger surface temperature at the point in time T. The defrost determination unit 93 then calculates (predicts) the heat exchanger surface temperature at the point in time (T + 1) by summing the heat exchanger surface temperature at the point in time T and the amount of variation of heat exchanger surface temperature read out from the heat exchanger surface temperature prediction table (S904 in FIG. 9).

It should be noted that when a value that is the same as the obtained value is not held in the heat exchanger surface temperature table, a predicted value of the heat exchanger surface temperature at the point in time (T + 1) is calculated by linear interpolation from a neighboring value. This process is performed per unit time (for example, every minute) until the defrost condition is satisfied (S905 in FIG. 9) or until the point in time T reaches the point in time tf (S908, S909 in FIG. 9). As a result, as FIG. 12B shows, the predicted value of the heat exchanger surface temperature at the point in time (T + 1) is calculated based on the heat exchanger surface temperature at the point in time t, and each time step S904 in FIG. 9 is executed, a predicted value of the heat exchanger surface temperature for one minute ahead is calculated.

The defrost determination unit 93 then determines whether the defrost condition is satisfied or not each time the heat exchanger surface temperature is predicted in step S904 (S905). The defrost determination unit 93 according to the first embodiment determines the defrost condition to be satisfied when the outside temperature at the point in time T is 5 degrees Celsius or less and the heat exchanger surface temperature at the point in time T is -10 degrees Celsius or less (yes in S905). On the other hand, when either of the above are not satisfied, the defrost determination unit 93 determines that the defrost condition is not satisfied (no in S905).

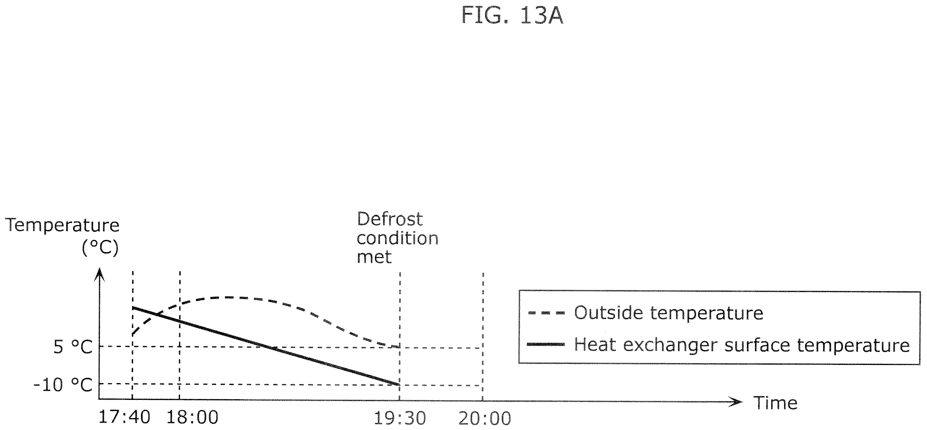

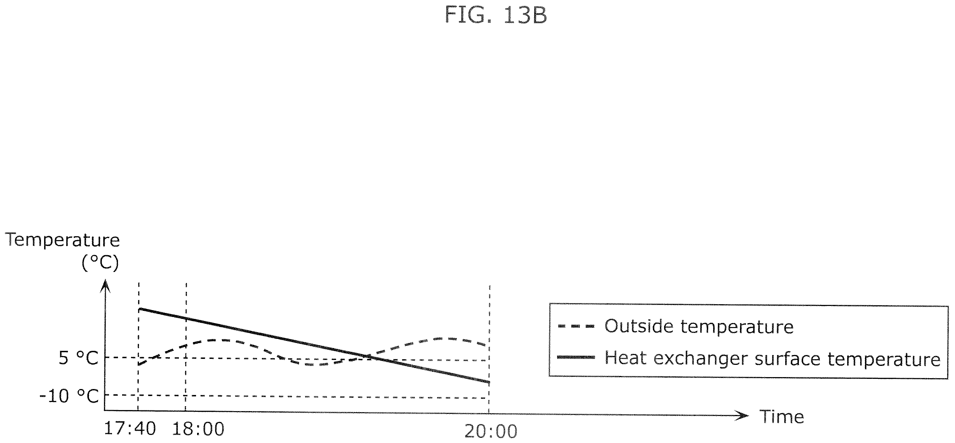

FIG. 13A shows an example of the prediction result when the defrost condition is satisfied, and FIG. 13B shows an example of the prediction result when the defrost condition is not satisfied. FIG. 13A and FIG. 13B show the outside temperature and heat exchanger surface temperature from the advance defrost start time of 17:40 on. In the example shown in FIG. 13A, since the defrost condition is satisfied up until the DR period end time tf (19:30) (yes in S905 in FIG. 9), prediction thereafter is skipped. On the other hand, in the example shown in FIG. 13B, since the defrost condition is not satisfied, the heat exchanger surface temperature up until the DR period end time tf is predicted.

In other words, when the defrost condition is not satisfied (no in S905), the defrost determination unit 93 sets the point in time T to be one minute thereafter (T + 1) (S908). Next, the defrost determination unit 93 determines whether the new point in time T is past the DR period end time tf or not (S909). When the new point in time T is past the DR period end time tf (yes in S909), the defrost determination unit 93 ends the advance defrost control process.

In this case, since the defrost instruction notice (S906) is not executed, the advance defrost processes shown in steps S802 through S806 in FIG. 8 are not executed. On the other hand, when the new point in time T is not past the DR period end time tf (no in S909), the defrost determination unit 93 predicts the heat exchanger surface temperature for the new point in time T (S904).

Moreover, when the defrost condition is satisfied by the end of the DR period (yes in S905), the defrost instruction unit 94 determines that advance defrosting is required and transmits the defrost instruction notice to the HP control unit 103 (S906), sets the advance defrost flag ON (S907), and completes the advance defrosting process.

As described above, the defrost determination unit 93 determines whether the defrost condition is satisfied at each point in time while repeating the prediction of the heat exchanger surface temperature for one minute in the future at each point in time. Then, when the defrost determination unit 93 determines that the defrost condition will be satisfied by the DR period end time tf, it determines that advance defrosting is required and transmits the defrost instruction notice to the HP control unit 103, and then ends the advance defrost control process. Moreover, when the defrost determination unit 93 determines that the defrost condition will not be satisfied by the DR period end time tf, it determines that advance defrosting is not required and ends the advance defrost control process.

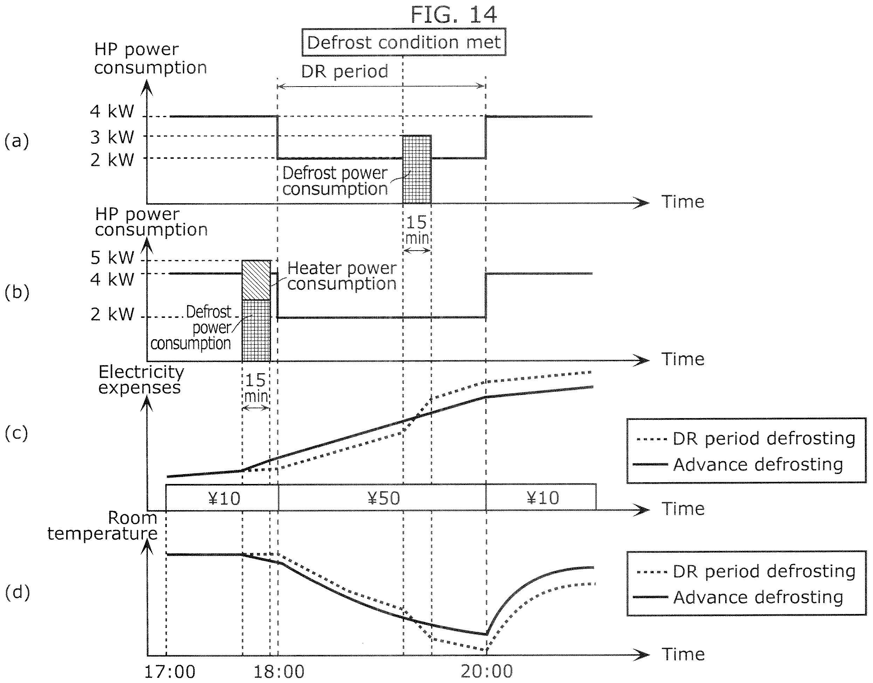

Next, an advantage of the first embodiment will be described with reference to FIG. 14. FIG. 14 (a) is an example of the power consumption (of the heat pump heating device 100) measured by the second power meter 7 when defrosting is performed during the DR period, without performing the advance defrost control process according to the first embodiment. FIG. 14 (b) is an example of the power consumption measured by the second power meter 7 when it is determined that the defrost condition will be satisfied in the DR period and advance defrosting is to be performed.

As FIG. 14 (a) and (b) show, in time periods outside of the DR period (in other words, time periods in which the outlet heated water temperature setting is high), the power consumption (excluding when defrosting) of the heat pump heating device 100 operating in the heating mode is 4 kW. Moreover, in the DR period (in other words, a time period in which the outlet heated water temperature setting is low), the power consumption (excluding when defrosting) of the heat pump heating device 100 operating in the heating mode is 2 kW.

Next, in the DR period shown in FIG. 14 (a), the power consumption of the heat pump heating device 100 operating in the defrost mode is only the 3 kW that the heat pump 101 consumes since operation of the heater 108 is modulated. Furthermore, before the DR period in FIG. 14 (b), the power consumption of the heat pump heating device 100 operating in the defrost mode totals 5 kW-the 2 kW consumed by the heater 108 and the 3 kW consumed by the heat pump 101-since operation of the heater 108 is not modulated. Moreover, in both FIG. 14 (a) and (b), defrosting takes 15 minutes.

First, a quantitative efficiency with respect to electrical costs is calculated. For example, as FIG. 14 (c) shows, the electrical cost per is 50 yen per kW from 18:00 to 20:00 and 10 yen per kW at all other times.

The total cost of electricity from 17:00 to 21:00 in FIG. 14 (a) (shown as the dashed line in FIG. 14 (c)) is 292.5 yen since the cost between 17:00 and 18:00 is 40 yen, 212.5 yen between 18:00 and 20:00, and 40 yen between 20:00 and 21:00. On the other hand, the total cost of electricity from 17:00 to 21:00 in FIG. 14 (b) (shown as the solid line in FIG. 14 (c)) is 282.5 yen since the cost between 17:00 and 18:00 is 42.5 yen, 200 yen between 18:00 and 20:00, and 40 yen between 20:00 and 21:00. In other words, the difference in electrical cost is 10 yen when defrosting is performed during the DR period like in the case shown in FIG. 14 (a) and advance defrosting is performed before the DR period start time like in the case shown in FIG. 14 (b).

Individually examining the time periods in FIG. 14 (c) in detail reveals that the cost of electricity up until the DR period start time in the case shown in FIG. 14 (b) in which advance defrosting is performed is higher than in the case shown in FIG. 14 (a) in which defrosting is performed during the DR period since power consumption is necessary for both the heat pump 101 operating in the defrost mode and the heater 108 while the advance defrosting is being performed in the case shown in FIG. 14 (b). However, the amount of increase (the incline of the solid line in FIG. 14 (c) is low since defrosting is being performed using the comparatively low-cost electricity provided outside of the DR period.

On the other hand, when defrosting is performed during the DR period like in the case shown in FIG. 14 (a), the cost in accordance with the defrosting exceeds the cost when advance defrosting is performed like in the case shown in FIG. 14 (b) since defrosting is performed during the high electrical cost DR period. In this way, when it is determined that the defrost condition will be satisfied in the DR period, electricity costs can be reduced by performing the defrosting before the DR period.

Next, an advantage regarding comfort will be described with reference to FIG. 14 (d). As FIG. 14 (d) shows, when advance defrosting is performed like in the case shown in FIG. 14 (b) (the solid line shown in FIG. 14 (d)), the temperature of the room gradually decreases since the mode of operation of the heat pump 101 is switched to the defrost mode before the DR period start time and heat supplied from the heat pump 101 to the heating device 104 is temporarily stopped. However, since the heater 108 is being used during this period, the rate of decrease in room temperature is relatively low (as indicated by the slope of the solid line shown in FIG. 14 (d)).

On the other hand, when defrosting is performed during the DR period like the case shown in FIG. 14 (a), the mode of operation of the heat pump 101 is switched to the defrost mode in the DR period, and heat ceases to be supplied from the heat pump 101 to the heating device 104. In this case, use of the heater 108 by the HP control unit 103 is modulated (prohibited) during the DR period, so the rate of decrease in room temperature exceeds that of when advance defrosting is performed. Consequently, the lowest temperature, which greatly effects comfort, is lower than when advance defrosting is performed like in the case shown in FIG. 14 (b). In this way, when it is determined that the defrost condition will be satisfied in the DR period, a reduction in the level of comfort can be improved by performing the defrosting before the DR period.

Moreover, when the time period at which the electric load peaks is set to be the DR period, it is desirable that power consumption is reduced as much as possible to stabilize the power grid and undesirable to unnecessarily consume power. In other words, the power consumed when defrosting is performed during the DR period in the case shown in FIG. 14 (a) is used to melt the frost formed on the heat exchanger 101a, and as such, can be said to be a waste of power as it does not contribute to heating the room.

However, when advance defrosting is performed like the case shown in FIG. 14 (b), the power consumed by the heat pump 101 during the DR period is used in entirety for heating the room. In this way, when it is determined that the defrost condition will be satisfied in the DR period, it is possible to efficiently consume power and contribute to the stabilization of the power grid by performing the defrosting before the DR period.

In this way, with the heat pump heating system control method according to the first embodiment, when it is determined that the defrost condition will be satisfied in the peak time period, it is possible to avoid defrosting being performed during the peak time period by performing the defrosting before the peak time period. This is useful as an operation method which contributes to the stabilization of grid power due to the peak cut in the peak time period, an increase in the comfort level of the user, and a decrease in user electricity expenses. In other words, it is possible to realize an increased stabilization of the power grid by setting the DR period to the power peak time period.

It should be noted that in the first embodiment, an instantaneous value of the outside temperature and the heat exchanger surface temperature were used as the condition for the switching of the mode of operation of the heat pump 101, but the present invention is not limited to this example. For example, the condition may be a condition using a consecutive value or an average time of movement such as "the heat exchanger surface temperature remained at or below -10 degrees Celsius for a given period of time (for example 3 minutes)".

Moreover, instead of the heat exchanger surface temperature, the temperature of the refrigerant flowing through the ducts may be used. Furthermore, the amount of frost build-up may be estimated using a combination of, for example, the heat exchanger surface temperature and the refrigerant temperature. In other words, in the above example, the surface temperature of the air heat exchanger is predicted every unit time for a given period, and when the surface temperature of the air heat exchanger obtained by the predicting is at or below a threshold value, it is determined that the defrost condition is satisfied. Similarly, the temperature of the refrigerant may be predicted every unit time for a given period, and when the temperature of the refrigerant obtained by the predicting is at or below a threshold value, the defrost condition may be determined to be satisfied. Furthermore, the amount of frost build-up may be measured directly using an imaging apparatus (camera) or the like.

Moreover, the defrost determination unit 93 according to the first embodiment uses the heat exchanger surface temperature prediction table to calculate the predicted value of the heat exchanger surface temperature, but the present invention is not limited to this example. For example, a model or equation representing the relationship between the outside temperature, the outside humidity, and the heat pump output may be used. Similarly, instead of creating an HP output prediction table to predict the heat pump output, the HP output prediction unit 92 may create a model or equation representing the relationship therebetween.

Moreover, the timing that the advance defrost control unit 9 performs the advance defrost control process (the advance defrost start time) is not limited to directly before the DR period start time, but may be directly after the DR signal is received.

### (Second Embodiment)

Next, the control method of the heat pump heating system according to the second embodiment will be explained.

In the first embodiment, as previously described, when it is determined that the defrost condition will be satisfied by the end of the DR period, defrosting is performed before the DR period start time, as FIG. 14 (b) shows. This makes it possible to avoid defrosting during the DR period, like FIG. 14 (a) shows.

However, in the first embodiment, since advance defrosting is not performed when the defrost condition will be satisfied after the DR end time, the efficiency of the heat pump 101 decreases due to frost build-up, and continues to operate in an inefficient manner during the DR period, creating a problem in that power consumption during the DR period increases. Moreover, in the case that defrosting is inevitably performed before the DR period start time, if the outside temperature were to increase after the end of the DR period and sunlight or atmospheric heat was to melt the frost, advance defrosting would be a waste of electricity.

Moreover, in the first embodiment, there are times when defrosting is performed directly after the end of the DR period. Directly after the end of the DR period, a process is executed to return the room temperature, which decreased during the DR period, to the set outlet heated water temperature. As a result, when defrosting is performed at this time, the span of time that the room is in a low-temperature state increases and comfort is sacrificed since power is consumed to perform the defrosting.

### (Solution)

For this reason, in contrast to the first embodiment in which it is determined whether the defrost condition will be satisfied by the end of the DR period or not, with the second embodiment, prediction is performed for even further futures times (tf2). It should be noted that the explanation will focus on the points of difference between the first and second embodiments. Since the flow of the heat pump heating system control method according to the second embodiment is the same as is shown in FIG. 6, details regarding common points with the first embodiment will be omitted. In other words, in the first embodiment, the "end of the given period" for determining whether or not the defrost condition will be satisfied is assumed to be the DR period end time tf. In contrast, in the second embodiment, the "end of the given period" is set to be longer than the first embodiment (tf2). Specifically, there are instances in which the "end of the given period" is set to a time that is after the DR period end time and a time after the temperature of the room equipped with the heating device 104 returns to the temperature at the point in time the DR signal was received, or instances in which "the end of the given period" is set to an arbitrary time during the next day (for example, 10:00).

### (Configuration and Operation)

The heat pump heating device 100 according to the second embodiment is the same as the heat pump heating device 100 according to the first embodiment regarding what is shown in FIG. 2 through FIG. 5.

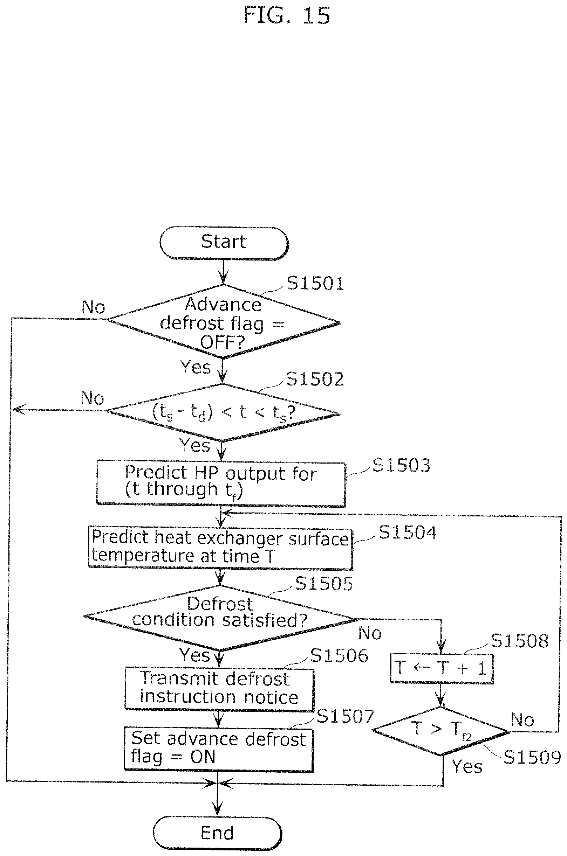

Next, an operation of the heat pump hot water supply and heating device 100 according to the second embodiment will be described. In the second embodiment, the "end of the given period (tf2)" is set to be 10:00 AM on the next day. In the second embodiment, similar to the first embodiment shown in FIG. 6, the HP control process and the DR control process are performed cyclically, and the HP control process performed is the same as that of the first embodiment shown in FIG. 8. Next, the DR control process according to the second embodiment is shown in FIG. 15.

In the advance defrost control process according to the second embodiment, when the current time t is past the advance defrost start time (ts - td) and before the DR period start time ts (yes in S1502), the HP output prediction unit 92 predicts the output of the heat pump 101 from the current time (the advance defrost start time) until 10:00 AM on the following day after the end of the DR period (tf2) (S1503).

When the defrost determination unit 93 according to the second embodiment determines that the defrost condition will not be satisfied by 10:00 the next day, when the outside temperature starts to increase, the defrost determination unit 93 determines that the frost will melt off on its own from the sunlight or atmospheric heat. Moreover, in the second embodiment, it is assumed that the time it takes for the room temperature after the end of the DR period to return to the temperature at the point in time the DR signal was received is set in advance to two hours.

Next, the defrost determination unit 93 predicts the heat exchanger surface temperature (S1504), and when the defrost condition is not satisfied (no in S1505), the point in time T is set to be one minute thereafter (T + 1) (S1508). Next, when the new point in time T is not past 10:00 on the following day after the end of the DR period (tf2) (no in S1509), the defrost determination unit 93 predicts the heat exchanger surface temperature for the new point in time T (S1504). Other processes are the same as those shown in FIG. 9 according to the first embodiment, and as such, descriptions thereof are omitted.

### (Advantageous Effects)

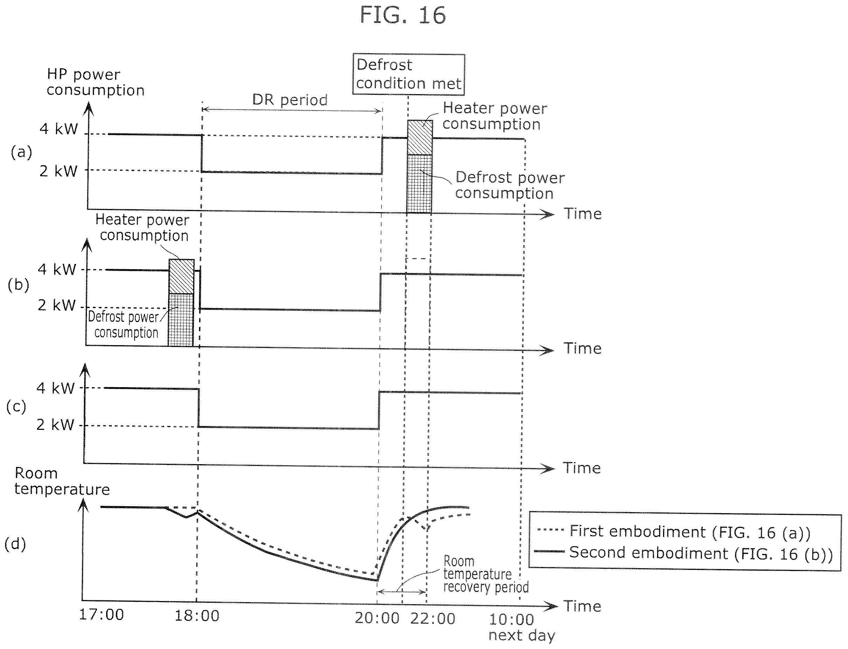

Next, the control method of the heat pump heating system according to the second embodiment will be explained with reference to FIG. 16. FIG. 16 (a) is an example of the power consumption calculated by the second power meter 7 when defrosting is performed using the heat pump heating system control method according to the first embodiment when it is determined that the defrost condition will be satisfied between the DR period end time tf and 10:00 the next day (tf2).

With the control method of the heat pump heating system according to the first embodiment, it is determined whether or not the defrost condition will be satisfied before the end of the DR period. In the case shown in FIG. 16 (a), since it is only determined whether the defrost condition is satisfied or not up until the DR period end time, advance defrosting is not performed. However, in the case shown in FIG. 16 (a), defrosting is performed after the DR period end time. In other words, in the case shown in FIG. 16 (a) a certain amount of frost build-up is present on the heat exchanger 101a from before the DR period, and the heat pump 101 is operated while frost is accumulated. Consequently, power consumption by the heat pump 101 during the DR period increases. Next, with the control method of the heat pump heating system according to the first embodiment, defrosting is performed once the defrost condition is satisfied, as previously described, up until 10:00 the next day.

FIG. 16 (b) is an example of the power consumption calculated by the second power meter 7 when defrosting is performed using the heat pump heating system control method according to the second embodiment when it is determined that the defrost condition will be satisfied between the DR period end time tf and 10:00 the next day (tf2).

With the heat pump heating system control method according to the second embodiment, when it is determined that the defrost condition will be satisfied before 10:00 the next day, defrosting is performed before the DR period start time ts. In other words, with the heat pump heating system control method according to the second embodiment, even if some frost has accumulated on the heat exchanger 101a from before the DR period, advance defrosting is performed, so it is possible to operate the heat pump 101 during the DR period with no frost build-up. Consequently, it is possible to reduce power consumption by the heat pump 101 in the DR period.

Moreover, FIG. 16 (c) is an example of the power consumption calculated by the second power meter 7 when defrosting is performed using the heat pump heating device control method according to the second embodiment when it is determined that the defrost condition will not be satisfied by 10:00 the next day (tf2).

As FIG. 16 (c) shows, when it is determined that the defrost condition will not be satisfied by 10:00 the next day, when the outside temperature starts to increase, it is determined that the frost will melt off on its own from the sunlight or atmospheric heat, and advance defrosting is not performed. For example, if defrosting were to be performed inevitably before the DR period start time, since the outside temperature will increase and sunlight or atmospheric heat will to melt the frost, advance defrosting would be a waste of electricity. With the control method of the heat pump heating system according to the second embodiment, wasteful use of electricity can be suppressed by avoiding this situation.

Moreover, FIG. 16 (d) compares the changes in room temperature occurring as a result of the operations shown in FIG. 16(a) and (b). With the first embodiment shown in FIG. 16 (a), when defrosting is performed from the end of the DR period tf until the room temperature recovers (room temperature recovery period (two hours)), the supplying of heat from the heat pump 101 to the heating device 104 is suspended while the room temperature is recovering. As such, room temperature further decreases while defrosting is being performed after the DR period end time tf, and comfort is sacrificed since room temperature needs to be recovered once again after the end of the defrosting (as is shown by the dashed line in FIG. 16 (d)). Moreover, with the second embodiment shown in FIG. 16(b), room temperature recovery is not suspended and comfort is not sacrificed since advance defrosting is performed when it is determined that the defrost condition will be satisfied during the room temperature recovery period (as is shown by the solid line in FIG. 16 (d)).

In this way, with the heat pump heating system control method according to the second embodiment, when it is determined that the defrost condition will be satisfied after the peak time period (that is, the DR period), let alone during the peak time period, defrosting is performed before the peak time period. With this, it is possible to not only avoid performing defrosting during the peak time period, but improve the operating efficiency of the heat pump 101 in the peak time period.

Moreover, when it is determined that the frost will melt off on its own from the sunlight or atmospheric heat (in other words, when it is determined that defrosting is not necessary), wasteful use of electricity can be avoided by not performing advance defrosting.

Moreover, since whether the defrost condition will be satisfied or not is determined until after the room temperature recover period after the peak time period, defrosting is not performed during the room temperature recovery period (in this example, two hours), and as such, comfort is not sacrificed. In other words, the heat pump heating system control method according to the second embodiment is useful for as an operation method which contributes to the stabilization of grid power due to the peak cut, an increase in the comfort level of the user, and a decrease in user electricity expenses.

It should be noted that in the second embodiment, the heat exchanger surface temperature is predicted for a period of time from the advance defrost start time (ts - td) until 10:00 the next day, when the outside temperature beings to rise to determine whether the defrost condition will be satisfied at some point in time. However, the present invention is not limited to this example. For example, the end of the prediction may be a point in time at which the room temperature recovers after the end of the DR period (22:00), the DR period start time on the next day (18:00 the following day), or 24 hours ahead. Moreover, the amount of time it takes for the room temperature to recover after the end of the DR period was exemplified as being two hours, but the amount of time taken in the past may be measured and the maximum time may be used (for example, four hours). In this case, the heat exchanger surface temperature may be predicted for four hours after the end of the DR period.

### (Third Embodiment)

Next, the control method of the heat pump heating system according to the third embodiment will be explained.

In the first embodiment, as previously described, when it is predicted that defrosting will be performed before the DR period end time, defrosting is avoided during the DR period by starting the defrosting 20 minutes before the DR period start time, as is shown in FIG. 14 (b).

In this case, room temperature decreases while defrosting is being performed since heat is not supplied from the heat pump 101 to the heating device 104. Moreover, directly after the mode of operation is switched from the defrost mode to the heating mode, the outlet heated water temperature of the heat exchanger 102 is below the set value. For this reason, as the case in FIG. 14 (b) shows, when defrosting is began directly before the DR period start time, the amount of time from the end of the defrosting to the DR period start time is short, and the DR period start time starts before the room temperature and the outlet heated water temperature of the heat exchanger 102 can return back to the set value. In this way, with the control method of the heat pump heating system according to the first embodiment, room temperature during the DR period becomes low and comfort is sacrificed.

### (Solution)

Next, an example of a method according to the second embodiment of controlling the start of the defrosting to occur even earlier than the advance defrost start time of the first embodiment will be given. It should be noted that the example will focus on the points of difference between the first and second embodiments. Since the flow of the heat pump heating system control method according to the second embodiment is the same as is shown in FIG. 6, details regarding common points with the first embodiment will be omitted.

In the first embodiment, the heat pump 101 mode of operation is switched to the defrost mode (at 17:40) so that the state of the heat pump satisfies the defrost complete condition (in other words, the defrosting ends) directly before the DR period start time (18:00). In contrast, with the second embodiment, controlling is performed so that advance defrosting is performed and the room temperature returns to the temperature prior to the advance defrosting before the DR period start time. More specifically, the start of the advance defrosting (the timing that the heat pump 101 mode of operation is switched to the defrost mode) is advanced from the DR period start time by an amount of time that it takes to perform defrosting and restore the room temperature.

### (Configuration and Operation)

The heat pump heating device 100 according to the second embodiment is the same as the heat pump heating device 100 according to the first embodiment regarding what is shown in FIG. 2 through FIG. 5.

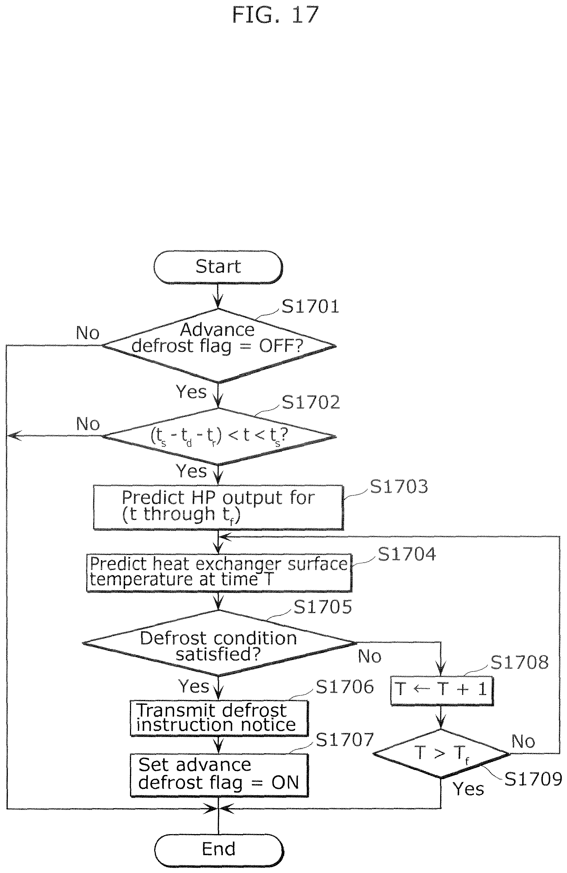

Next, an operation of the heat pump hot water supply and heating device 100 according to the second embodiment will be described. In the second embodiment, similar to the first embodiment shown in FIG. 6, the HP control process and the DR control process are performed cyclically, and the HP control process performed is the same as that of the first embodiment shown in FIG. 8. Next, the DR control process according to the second embodiment is shown in FIG. 17.

In the advance defrost control process according to the second embodiment, an amount of time (60 minutes) calculated by summing an amount of time td required for defrosting (20 minutes) and an amount of time tr required for the room temperature and the outlet heated water temperature of the heat exchanger 102 to return to pre-defrosting levels (40 minutes) is subtracted from the DR period start time 18:00 (ts) to calculate the advance defrost start time, 17:00 (ts - td - tr). It should be noted that in the second embodiment, the amount of time (40 minutes) that it takes for the room temperature and the outlet heated water temperature of the heat exchanger 102 to return to pre-defrosting levels is set in advance, but this amount of time differs depending on the house and performance ability of the heat pump 101.

When the current time t is past the advance defrost start time (ts - td - tr) and before the DR period start time ts (yes in S1702), the HP output prediction unit 92 predicts the output of the heat pump 101 from the advance defrost start time until the end of the DR period tf (S1703). Other processes are the same as those shown in FIG. 9 according to the first embodiment, and as such, descriptions thereof are omitted.

### (Advantageous Effects)

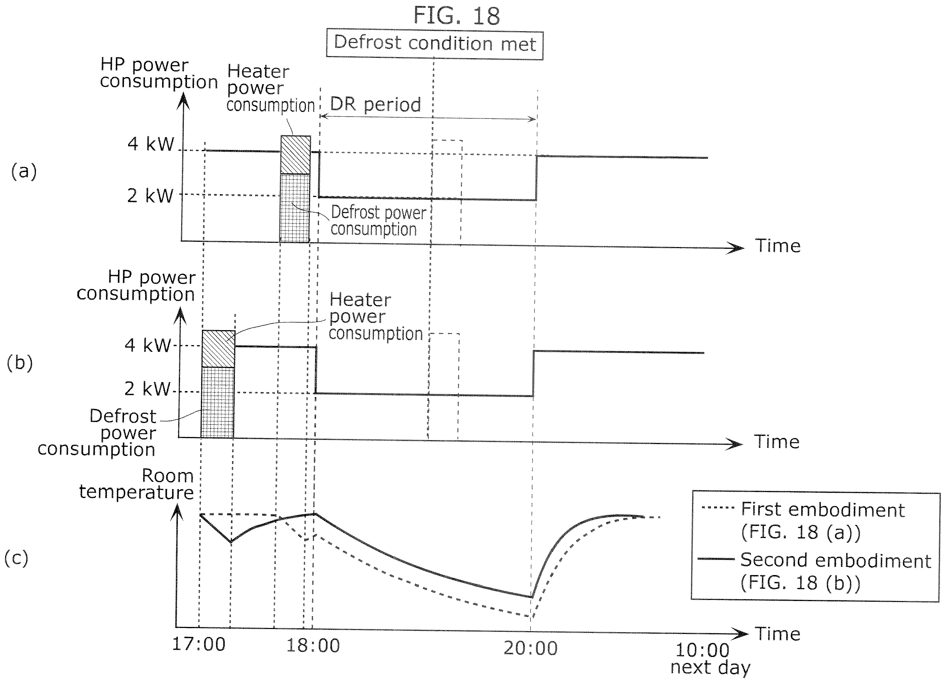

Next, the control method of the heat pump heating system according to the second embodiment will be explained with reference to FIG. 18. FIG. 18 (a) is an example of the power consumption calculated by the second power meter 7 when defrosting is performed using the heat pump heating system control method according to the first embodiment when it is determined that the defrost condition will be satisfied in the DR period. In the heat pump heating system control method according to the first embodiment, the defrosting ends directly before the DR period start time ts.

FIG. 18 (b), similar to FIG. 18 (b), is an example of the power consumption calculated by the second power meter 7 when defrosting is performed using the heat pump heating system control method according to the second embodiment when it is determined that the defrost condition will be satisfied in the DR period. With the heat pump heating system control method according to the second embodiment, advance defrosting is performed at the advance defrost start time (ts - td - tr) advanced from the DR period start time ts by an amount of time td required for defrosting and an amount of time tr required for the room temperature and the outlet heated water temperature of the heat exchanger 102 to return to pre-defrosting levels.

Moreover, FIG. 18 (c) compares the changes in room temperature occurring as a result of the operations shown in FIG. 18(a) and (b). With the first embodiment shown in FIG. 18 (a), since defrosting is performed directly before the DR period start time ts, the room temperature is still low when time reaches the DR period start time ts (as is shown by the dashed line in FIG. 18 (c)). On the other hand, with the second embodiment shown in FIG. 18 (b), since sufficient time between the end of the defrosting and the DR period start time ts is reserved for the room temperature and the outlet heated water temperature of the heat exchanger 102 to return to pre-defrosting levels, compared to FIG. 18 (a), a higher room temperature can be maintained during the DR period (as is shown by the solid line in FIG. 18 (c)).

Moreover, with the second embodiment shown in FIG. 18 (b), the defrost start time is advanced by the minimum amount of time required to return the room temperature and the outlet heated water temperature of the heat exchanger 102 to pre-defrosting levels by the DR period start time ts (40 minutes in the above example). As such, it is possible to keep the amount of frost build-up at the DR period start time ts to a small amount since the time from the end of the defrosting to the DR period start time ts is not unnecessarily long.

For example, when the DR signal is received at 16:00 and defrosting is performed from 16:00, the room temperature and the outlet heated water temperature of the heat exchanger 102 return to pre-defrosting levels by 17:00, but the amount of time from the end of the defrosting until the DR period start time of 18:00 increases. Consequently, the amount of frost build-up at the DR period start time ts exceeds that of the second embodiment. This decreases the effectiveness of the operation of the heat pump 101 in the DR period and increases power consumption. With the second embodiment, power consumption by the heat pump 101 during the DR period can be reduced by timing and performing the advance defrosting so that the room temperature and the outlet heated water temperature of the heat exchanger 102 return to pre-defrosting levels directly before the DR period start time.

In this way, with the heat pump heating system control method according to the second embodiment, when it is determined that the defrost condition will be satisfied in the peak time period, it is possible to avoid performing defrosting during the peak time period by timing the defrosting so that the room temperature and the outlet heated water temperature of the heat exchanger 102 return to pre-defrosting levels directly before the peak time period. Moreover, it is possible to improve the operating efficiency of the heat pump 101 during the peak time period without sacrificing comfort. This is useful as an operation method which contributes to the stabilization of grid power due to the peak cut, an increase in the comfort level of the user, and a decrease in user electricity expenses.

It should be noted that in the second embodiment, the amount of time that it takes for the room temperature and the outlet heated water temperature of the heat exchanger 102 to return to pre-defrosting levels is set at 40 minutes, but this time may be set by, for example, referring to room temperature recovery rates by the heat pump 101 with respect to past outside temperatures to predict a suitable recovery time.

It should be noted that both the first and second embodiments are written in regard to a heat pump hot water heating system, but the present invention is not limited to this, and may be a heat pump air conditioning unit.

It should be noted that although the present invention was described based on the previous embodiments, the present invention is not limited to these embodiments. The following examples are also intended to be included within the scope of the present invention.

(1) The preceding devices are, specifically, realized as a computer system configured from a microprocessor, ROM, RAM, a hard disk unit, a display unit, a keyboard, and a mouse, for example. A computer program is stored in the RAM or the hard disk unit. Each of the devices achieves its function as a result of the microprocessor operating according to the computer program. Here, the computer program is configured of a plurality of pieced together instruction codes indicating commands to be made to the computer in order to achieve a given function.
(2) A portion or all of the components of each of the preceding devices may be configured from one system LSI (Large Scale Integration). A system LSI is a super-multifunction LSI manufactured with a plurality of components integrated on a single chip, and specifically is a computer system configured of a microprocessor, ROM, and RAM, for example. A computer program is stored in the ROM. The system LSI achieves its function as a result of the microprocessor loading the computer program from the ROM into the RAM and performing operations such as calculations according to the computer program.
(3) A portion or all of the components of each of the preceding devices may each be configured from a detachable IC card or a stand-alone module. The IC card and the module are computer systems configured from a microprocessor, ROM, and RAM, for example. The IC card and the module may include the super-multifunction LSI described above. The IC card and the module achieve their function as a result of the microprocessor operating according to a computer program. The IC card and the module may be tamperproof.
(4) The present invention may be realized as a method shown above. Moreover, the present invention may also be realized as a computer program realizing these methods with a computer, or a digital signal of the computer program.
   Moreover, the present invention may also be realized as the computer program or the digital signal stored on storage media readable by a computer, such as a flexible disk, hard disk, CD-ROM, MO, DVD, DVD-ROM, DVD-RAM, BD (Blu-ray Disc), or a semiconductor memory. The present invention may also be realized as a digital signal stored on the above mentioned storage media.
   Moreover, the present invention may also be realized by transmitting the computer program or the digital signal, for example, via an electric communication line, a wireless or wired line, a network such as the Internet, or data broadcasting.
   Moreover, the present invention may be a computer system including memory storing a computer program and a microprocessor operating according to the computer program.
   Moreover, the computer program or the digital signal may be implemented by an independent computer system by being stored on the storage media and transmitted, or sent via the network.
(5) The preceding embodiments and the preceding transformation examples may be individually combined.

Hereinbefore, the embodiments of the present invention were described with reference to the drawings, but the present invention is not limited to the embodiments depicted in the drawings. It is acceptable to add variations to or modify the embodiments depicted in the drawings within the scope of the invention defined by the claims.

### [Industrial Applicability]

The heat pump heating system control method according to the present invention is useful as an operation method which contributes to the stabilization of grid power due to the peak cut and a decrease in user electricity expenses since defrosting is not required during the peak time period, during which power consumption increases.

### [Reference Signs List]

1 heat pump heating system
4 energy supplier
5 electric load
6 first power meter
7 second power meter
8 system control unit
9 advance defrost control unit
80 communication unit
81 data collection unit
82 DR communication unit
83 output modulation operation control unit
91 memory unit
92 HP output prediction unit
93 defrost determination unit
94 defrost instruction unit
100 heat pump heating device
101 heat pump
101a, 102 heat exchanger
101b compressor
101c expansion valve
103 HP control unit
104 heating device
105 outside temperature detecting unit
106 outside humidity detecting unit
107 heat exchanger surface temperature detecting unit
108 heater
109 outlet heated water temperature detecting unit
110 flow rate detecting unit
111 inlet water temperature detecting unit

## Claims

1. A method of controlling a heating system that operates using power supplied from a power supply source (4), the heating system including:
a heat pump (101) that generates heat using the power supplied from the power supply source; and
a radiator unit (101a, 104) that radiates the heat generated by the heat pump, the heat pump (101) being operable in a heating mode for generating heat to be radiated by the radiating unit and a defrost mode for removing frost formed on the heat pump, the method comprising:
obtaining, from the power supply source (4), an output modulation instruction specifying an output modulation period during which power consumption by the heat pump is modulated;
when the output modulation instruction is obtained in the obtaining, predicting a state of the heat pump (101) in a given period including the output modulation period and determining whether the state of the heat pump predicted satisfies a first condition indicating that switching a mode of operation of the heat pump to the defrost mode is required; and
controlling the mode of operation of the heat pump (101) according to a determination result of the predicting and determining,
wherein in the controlling,
when it is determined in the predicting and determining that the state of the heat pump (101) in the given period satisfies the first condition, the mode of operation of the heat pump (101) is switched to the defrost mode before a start time of the output modulation period, and
when it is determined in the predicting and determining that the state of the heat pump (101) in the given period does not satisfy the first condition, the heat pump (101) is caused to operate in the heating mode, without switching the mode of operation of the heat pump (101) to the defrost mode before the start time of the output modulation period,
the method further comprising modulating operation of the heat pump (101) in the output modulation period, wherein in the modulating, the heat pump (101) is caused to operate in an output modulation mode and prevented from operating in the defrost mode, the output modulation mode causing an output of the heat pump (101) to be smaller than an output of the heat pump (101) in the heating mode.

2. The method according to Claim 1, wherein the controlling is performed while the heat pump (101) is not operating in the defrost mode after obtaining the output modulation instruction.

3. The method according to Claim 1, wherein in the output modulation mode, the heat pump (101) operates at an output no greater than half of a rated output of the heat pump.

4. The method according to any one of Claims 1 to 3,
wherein when the state of the heat pump (101) satisfies a second condition indicating that the frost has been removed, the heat pump (101) is switched from the defrost mode to the heating mode, and
in the controlling, the switching of the heat pump to the defrost mode is timed so that the state of the heat pump satisfies the second condition before the start time of the output modulation period.

5. The method according to Claim 4, wherein the given period ends at an end time of the output modulation period.

6. The method according to any one of Claims 1 to 3, further comprising
switching an amount of heat generated per unit time by the heat pump (101) from a first amount of heat to a second amount of heat at the start time of the output modulation period and from the second amount of heat to the first amount of heat at an end time of the output modulation period, the second amount of heat being less than the first amount of heat,
wherein the given period ends at a point in time after the end time of the output modulation period at which a temperature of a room in which the radiator unit (101a, 104) is installed returns to a level at a point in time of the obtainment of the output modulation instruction.

7. The method according to Claim 6, wherein the given period ends the following morning.

8. The method according to any one of Claims 1 to 3,
wherein when the state of the heat pump satisfies a second condition indicating that the frost has been removed, the heat pump is switched from the defrost mode to the heating mode, and
in the controlling, the switching of the heat pump to the defrost mode is timed so that a temperature of a room in which the radiator unit is installed returns to a level prior to the heat pump switching to the defrost mode before the start time of the output modulation period.

9. A heating system that operates using power supplied from a power supply source (4), the heating system comprising
a heating device (100) and a system control unit (8) configured to control the heating device,
the heating device (100) including:
a heat pump (101) that generates heat using the power supplied from the power supply source; and
a radiator unit (104) configured to radiate the heat generated by the heat pump (101),
the heat pump (101) being switchable between a heating mode for generating heat to be radiated by the radiator unit (104) and a defrost mode for removing frost formed on the heat pump, and
**characterized in that** the system control unit includes:
an obtaining unit configured to obtain, from the power supply source (4), an output modulation instruction specifying an output modulation period during which power consumption by the heat pump (101) is modulated;
a prediction unit configured to, when the output modulation instruction is obtained by the obtaining unit, predict a state of the heat pump (101) in a given period including the output modulation period;
an advance defrost determination unit configured to determine whether the state of the heat pump (101) predicted by the prediction unit satisfies a first condition indicating that switching a mode of operation of the heat pump (101) to the defrost mode is required; and
an instruction unit configured to make a notification to switch the mode of operation of the heat pump (101) to the defrost mode before a start time of the output modulation period when it is determined by the determination unit that the state of the heat pump (101) in the given period satisfies the first condition,
wherein the heat pump system control unit further includes an output modulation operation control unit configured to cause the heat pump (101) to operate in an output modulation mode in the output modulation period, the output modulation mode causing an output of the heat pump (101) to be smaller than an output of the heat pump (101) in the heating mode.

10. The heating system according to Claim 9,
wherein the heating device (100) further includes a heat pump control unit (103) configured to control operation of the heat pump (101), and
when the heat pump control unit (103) obtains the notification from the instruction unit, the heat pump control unit (103) is configured to switch the mode of operation of the heat pump (101) to the defrost mode before the start time of the output modulation period.

11. The heating system according to Claim 10, wherein when the defrost determination unit determines that the state of the heat pump (101) in the given period does not satisfy the first condition, the heat pump control unit (103) is configured to cause the heat pump to operate in the heating mode, without switching the mode of operation of the heat pump to the defrost mode before the start time of the output modulation period.

12. The heating system according to any one of Claims 9 to 11, wherein the heating device (100) further includes a heat exchanger surface temperature detecting unit.

13. The heating system according to any one of claims 9 to 12, wherein
the heating device further includes:
a heat pump control unit (103) configured to switch a mode of operation of the heat pump (101) between the heating mode for generating heat to be radiated by the radiator unit (101a, 104) and the defrost mode for removing frost formed on the heat pump (101); and
the system control unit (8) is configured to control the heat pump control unit (103).

## Patentansprüche

1. Verfahren zum Steuern eines Heizsystems, das unter Verwendung eines von einer Stromversorgungsquelle (4) zugeführtem Stroms betrieben wird, wobei das Heizsystem umfasst:
eine Wärmepumpe (101), die Wärme unter Verwendung des von der Stromversorgungsquelle zugeführten Stroms erzeugt, und
eine Radiatoreinheit (101a, 104), die die durch die Wärmepumpe erzeugte Wärme abstrahlt,
wobei die Wärmepumpe (101) in einem Heizmodus für das Erzeugen von durch die Radiatoreinheit abzustrahlender Wärme und in einem Entfrostungsmodus für das Beseitigen eines an der Wärmepumpe gebildeten Frosts betrieben werden kann,
wobei das Verfahren umfasst:
Erhalten, von der Stromversorgungsquelle (4), eines Ausgabemodulationsbefehls, der eine Ausgabemodulationsperiode spezifiziert, während welcher der Stromverbrauch durch die Wärmepumpe moduliert wird,
wenn der Ausgabemodulationsbefehl in dem Erhalten erhalten wird, Voraussagen eines Zustands der Wärmepumpe (101) in einer gegebenen Periode, die die Ausgabemodulationsperiode umfasst, und Bestimmen, ob der vorausgesagte Zustand der Wärmepumpe eine erste Bedingung erfüllt, die angibt, dass ein Wechsel des Betriebsmodus der Wärmepumpe zu dem Entfrostungsmodus erforderlich ist, und
Steuern des Betriebsmodus der Wärmepumpe (101) in Entsprechung zu dem Bestimmungsergebnis des Voraussagens und Bestimmens,
wobei in dem Steuern:
wenn in dem Voraussagen und Bestimmen bestimmt wird, dass der Zustand der Wärmepumpe (101) in der gegebenen Periode die erste Bedingung erfüllt, der Betriebsmodus der Wärmepumpe (101) zu dem Entfrostungsmodus vor einer Startzeit der Ausgabemodulationsperiode gewechselt wird, und
wenn in dem Voraussagen und Bestimmen bestimmt wird, dass der Zustand der Wärmepumpe (101) in der gegebenen Periode die erste Bedingung nicht erfüllt, veranlasst wird, dass die Wärmepumpe (101) in dem Heizmodus betrieben wird, ohne dass der Betriebsmodus der Wärmepumpe (101) zu dem Entfrostungsmodus vor der Startzeit der Ausgabemodulationsperiode gewechselt wird,
wobei das Verfahren weiterhin das Modulieren des Betriebs der Wärmepumpe (101) in der Ausgabemodulationsperiode umfasst, wobei in dem Modulieren veranlasst wird, dass die Wärmepumpe (101) in einem Ausgabemodulationsmodus betrieben wird, und ein Betrieb in dem Entfrostungsmodus verhindert wird, wobei der Ausgabemodulationsmodus veranlasst, dass die Ausgabe der Wärmepumpe (101) kleiner ist als die Ausgabe der Wärmepumpe (101) in dem Heizmodus.

2. Verfahren nach Anspruch 1, wobei das Steuern durchgeführt wird, während die Wärmepumpe (101) nicht in dem Entfrostungsmodus betrieben wird, nachdem der Ausgabemodulationsbefehl erhalten wurde.

3. Verfahren nach Anspruch 1, wobei in dem Ausgabemodulationsmodus die Wärmepumpe (101) mit einer Ausgabe betrieben wird, die nicht größer als die halbe Nennausgabe der Wärmepumpe ist.

4. Verfahren nach einem der Ansprüche 1 bis 3,
wobei, wenn der Zustand der Wärmepumpe (101) eine zweite Bedingung erfüllt, die angibt, dass der Frost beseitigt wurde, die Wärmepumpe (101) von dem Entfrostungsmodus zu dem Heizmodus gewechselt wird, und
in dem Steuern das Wechseln der Wärmepumpe zu dem Entfrostungsmodus zeitlich derart bewerkstelligt wird, dass der Zustand der Wärmepumpe die zweite Bedingung vor der Startzeit der Ausgabemodulationsperiode erfüllt.

5. Verfahren nach Anspruch 4, wobei die gegebene Periode zu einer Endzeit der Ausgabemodulationsperiode endet.

6. Verfahren nach einem der Ansprüche 1 bis 3, das weiterhin umfasst:
Wechseln der durch die Wärmepumpe (101) pro Zeiteinheit erzeugten Wärmemenge von einer ersten Wärmemenge zu einer zweiten Wärmemenge zu der Startzeit der Ausgabemodulationsperiode und von der zweiten Wärmemenge zu der ersten Wärmemenge zu einer Endzeit der Ausgabemodulationsperiode, wobei die zweite Wärmemenge kleiner ist als die erste Wärmemenge,
wobei die gegebene Periode zu einem Zeitpunkt nach der Endzeit der Ausgabemodulationsperiode endet, zu dem die Temperatur eines Raums, in dem die Radiatoreinheit (101a, 104) installiert ist, zu dem Pegel zum Zeitpunkt des Erhaltens des Ausgabemodulationsbefehls zurückkehrt.

7. Verfahren nach Anspruch 6, wobei die gegebene Periode am folgenden Morgen endet.

8. Verfahren nach einem der Ansprüche 1 bis 3,
wobei, wenn der Zustand der Wärmepumpe eine zweite Bedingung erfüllt, die angibt, dass der Frost beseitigt wurde, die Wärmepumpe von dem Entfrostungsmodus zu dem Heizmodus gewechselt wird, und
in dem Steuern das Wechseln der Wärmepumpe zu dem Entfrostungsmodus zeitlich derart bewerkstelligt wird, dass die Temperatur eines Raums, in dem die Radiatoreinheit installiert ist, zu dem Pegel vor dem Wechseln der Wärmepumpe zu dem Entfrostungsmodus vor der Startzeit der Ausgabemodulationsperiode zurückkehrt.

9. Heizsystem, das unter Verwendung eines von einer Stromversorgungsquelle (4) zugeführtem Stroms betrieben wird, wobei das Heizsystem umfasst:
eine Heizvorrichtung (100) und eine Systemsteuereinheit (8), die für das Steuern der Heizvorrichtung konfiguriert ist,
wobei die Heizvorrichtung (100) umfasst:
eine Wärmepumpe (101), die Wärme unter Verwendung des von der Stromversorgungsquelle zugeführten Stroms erzeugt, und
eine Radiatoreinheit (104), die die durch die Wärmepumpe (101) erzeugte Wärme abstrahlt,
wobei die Wärmepumpe (101) zwischen einem Heizmodus für das Erzeugen von durch die Radiatoreinheit (104) abzustrahlender Wärme und einem Entfrostungsmodus für das Beseitigen eines an der Wärmepumpe gebildeten Frosts gewechselt werden kann,
**dadurch gekennzeichnet, dass** die Systemsteuereinheit enthält:
eine Erhaltungseinheit, die konfiguriert ist zum Erhalten, von der Stromversorgungsquelle (4), eines Ausgabemodulationsbefehls, der eine Ausgabemodulationsperiode, während welcher der Stromverbrauch durch die Wärmepumpe (101) moduliert wird, spezifiziert,
eine Voraussageeinheit, die konfiguriert ist zum, wenn der Ausgabemodulationsbefehl durch die Erhaltungseinheit erhalten wird, Voraussagen eines Zustands der Wärmepumpe (101) in einer gegebenen Periode, die die Ausgabemodulationsperiode umfasst,
eine Bevorstehende-Entfrostung-Bestimmungseinheit, die konfiguriert ist zum Bestimmen, ob der durch die Voraussageeinheit vorausgesagte Zustand der Wärmepumpe (101) eine erste Bedingung erfüllt, die angibt, dass ein Wechsel des Betriebsmodus der Wärmepumpe (101) zu dem Entfrostungsmodus erforderlich ist, und
eine Befehlseinheit, die konfiguriert ist zum Vorsehen einer Benachrichtigung für das Wechseln des Betriebsmodus der Wärmepumpe (101) zu dem Entfrostungsmodus vor einer Startzeit der Ausgabemodulationsperiode, wenn durch die Bestimmungseinheit bestimmt wird, dass der Zustand der Wärmepumpe (101) in der gegebenen Periode die erste Bedingung erfüllt,
wobei die Wärmepumpensystem-Steuereinheit weiterhin eine Ausgabemodulationsbetrieb-Steuereinheit enthält, die konfiguriert ist zum Veranlassen, dass die Wärmepumpe (101) in einem Ausgabemodulationsmodus in der Ausgabemodulationsperiode betrieben wird, wobei der Ausgabemodulationsmodus veranlasst, dass die Ausgabe der Wärmepumpe (101) kleiner ist als die Ausgabe der Wärmepumpe (101) in dem Heizmodus.

10. Heizsystem nach Anspruch 9, wobei:
die Heizvorrichtung (100) weiterhin eine Wärmepumpen-Steuereinheit (103) enthält, die konfiguriert ist zum Steuern des Betriebs der Wärmepumpe (101), und
wenn die Wärmepumpen-Steuereinheit (103) die Benachrichtigung von der Befehlseinheit erhält, die Wärmepumpen-Steuereinheit (103) konfiguriert ist zum Wechseln des Betriebsmodus der Wärmepumpe (101) zu dem Entfrostungsmodus vor der Startzeit der Ausgabemodulationsperiode.

11. Heizsystem nach Anspruch 10, wobei, wenn die Entfrostungsbestimmungseinheit bestimmt, dass der Zustand der Wärmepumpe (101) in der gegebenen Periode die erste Bedingung nicht erfüllt, die Wärmepumpen-Steuereinheit (103) konfiguriert ist zum Veranlassen, dass die Wärmepumpe in dem Heizmodus betrieben wird, ohne den Betriebsmodus der Wärmepumpe zu dem Entfrostungsmodus vor dem Start der Ausgabemodulationsperiode zu wechseln.

12. Heizsystem nach einem der Ansprüche 9 bis 11, wobei die Heizvorrichtung (100) weiterhin eine Wärmetauscher-Oberflächentemperatur-Erfassungseinheit enthält.

13. Heizsystem nach einem der Ansprüche 9 bis 12, wobei:
die Heizvorrichtung weiterhin enthält:
eine Wärmepumpen-Steuereinheit (103), die konfiguriert ist zum Wechseln des Betriebsmodus der Wärmepumpe (101) zwischen dem Heizmodus für das Erzeugen von durch die Radiatoreinheit abzustrahlender Wärme und dem Entfrostungsmodus für das Beseitigen eines an der Wärmepumpe gebildeten Frosts, und
die Systemsteuereinheit (8) konfiguriert ist zum Steuern der Wärmepumpen-Steuereinheit (103).

## Revendications

1. Procédé pour commander un système de chauffage qui fonctionne à l'aide d'énergie fournie par une source d'alimentation en énergie (4), le système de chauffage comprenant :
une pompe à chaleur (101) qui génère de la chaleur en utilisant l'énergie fournie par la source d'alimentation en énergie ; et
un radiateur (101a, 104) qui rayonne la chaleur générée par la pompe à chaleur,
la pompe à chaleur (101) pouvant fonctionner selon un mode de chauffage pour générer la chaleur destinée à être rayonnée par le radiateur et selon un mode de dégivrage pour éliminer du givre formé sur la pompe à chaleur,
le procédé comprenant les étapes consistant à :
obtenir auprès de la source d'alimentation en énergie (4) une instruction de modulation de puissance indiquant une période de modulation de puissance pendant laquelle la consommation d'énergie par la pompe à chaleur est modulée ;
une fois l'instruction de modulation de puissance obtenue lors de l'étape d'obtention, prédire un état de la pompe à chaleur (101) dans une période donnée comprenant la période de modulation de puissance, et déterminer si l'état de la pompe à chaleur prédit remplit une première condition indiquant qu'il est nécessaire de basculer un mode de fonctionnement de la pompe à chaleur vers le mode de dégivrage ; et
commander le mode de fonctionnement de la pompe à chaleur (101) selon un résultat de la prédiction et de la détermination,
dans lequel, lors de la commande,
lorsqu'il est déterminé lors de l'étape de prédiction et de détermination que l'état de la pompe à chaleur (101) dans la période donnée remplit la première condition, le mode de fonctionnement de la pompe à chaleur (101) est basculé vers le mode de dégivrage avant le démarrage de la période de modulation de puissance , et
lorsqu'il est déterminé lors de l'étape de prédiction et de détermination que l'état de la pompe à chaleur (101) dans la période donnée ne remplit pas la première condition, la pompe à chaleur (101) est amenée à fonctionner selon le mode de chauffage sans faire basculer le mode de fonctionnement de la pompe à chaleur (101) vers le mode de dégivrage avant le démarrage de la période de modulation de puissance ,
le procédé comprenant en outre une étape consistant à moduler le fonctionnement de la pompe à chaleur (101) lors de la période de modulation de puissance, où, lors de l'étape de modulation, la pompe à chaleur (101) est amenée à fonctionner selon un mode de modulation de puissance et empêchée de fonctionner selon le mode de dégivrage, le mode de modulation de puissance occasionnant une puissance de sortie de la pompe à chaleur (101) plus faible que la puissance de sortie de la pompe à chaleur (101) dans le mode de chauffage.

2. Procédé selon la revendication 1, lors duquel la commande est réalisée pendant que la pompe à chaleur (101) ne fonctionne pas selon le mode de dégivrage après l'obtention de l'instruction de modulation de puissance.

3. Procédé selon la revendication 1, lors duquel, dans le mode de modulation de puissance, la pompe à chaleur (101) fonctionne avec une puissance qui n'est pas supérieure à la moitié d'une puissance nominale de la pompe à chaleur.

4. Procédé selon l'une quelconque des revendications 1 à 3,
lors duquel, lorsque l'état de la pompe à chaleur (101) remplit une seconde condition indiquant que le givre a été éliminé, le mode de fonctionnement de la pompe à chaleur (101) est basculé du mode de dégivrage vers le mode de chauffage, et
lors de la commande, le basculement de la pompe à chaleur vers le mode de dégivrage est effectué à un moment où l'état de la pompe à chaleur remplit la seconde condition avant le démarrage de la période de modulation de puissance.

5. Procédé selon la revendication 4, lors lequel la période donnée se termine à la fin de la période de modulation de puissance.

6. Procédé selon l'une quelconque des revendications 1 à 3, comprenant en outre les étapes consistant à :
faire passer une quantité de chaleur générée par la pompe à chaleur (101) par unité de temps d'une première quantité de chaleur à une seconde quantité de chaleur au début de la période de modulation de puissance et de la seconde quantité de chaleur à la première quantité de chaleur à la fin de la période de modulation de puissance, la seconde quantité de chaleur étant inférieure à la première quantité de chaleur,
la période donnée se terminant à un moment donné, après la fin de la période de modulation de puissance, auquel une température d'une pièce dans laquelle est installé le radiateur (101a, 104) retourne à un niveau correspondant à un moment donné correspondant à l'obtention de l'instruction de modulation de puissance.

7. Procédé selon la revendication 6, lors duquel la période donnée se termine le matin suivant.

8. Procédé selon l'une quelconque des revendications 1 à 3,
lors duquel, lorsque l'état de la pompe à chaleur remplit une seconde condition indiquant que le givre a été éliminé, le mode de fonctionnement de la pompe à chaleur est basculé du mode de dégivrage vers le mode de chauffage, et
lors de la commande, le basculement de la pompe à chaleur vers le mode de dégivrage est effectué à un moment où la température d'une pièce dans laquelle est installé le radiateur retourne à un niveau précédent le moment où le mode de fonctionnement de la pompe à chaleur est basculé vers le mode de dégivrage avant le début de la période de modulation de puissance.

9. Système de chauffage qui fonctionne à l'aide d'énergie fournie par une source d'alimentation en énergie (4), le système de chauffage comprenant :
un dispositif de chauffage (100) et une unité de commande de système (8) configurée pour commander le dispositif de chauffage,
le dispositif de chauffage (100) comprenant :
une pompe à chaleur (101) qui génère de la chaleur en utilisant l'énergie fournie par la source d'alimentation en énergie ; et
un radiateur (104) qui rayonne la chaleur générée par la pompe à chaleur (101),
la pompe à chaleur (101) pouvant être basculée entre un mode de chauffage pour générer la chaleur destinée à être rayonnée par le radiateur (104) et un mode de dégivrage pour éliminer du givre formé sur la pompe à chaleur, et
**caractérisé en ce que** l'unité de commande de système comporte :
une unité d'obtention configurée pour obtenir auprès de la source d'alimentation en énergie (4) une instruction de modulation de puissance indiquant une période de modulation de puissance pendant laquelle la consommation d'énergie par la pompe à chaleur (101) est modulée ;
une unité de prédiction configurée pour prédire, une fois l'instruction de modulation de puissance obtenue par l'unité d'obtention, un état de la pompe à chaleur (101) dans une période donnée comprenant la période de modulation de puissance ;
une unité de détermination anticipée de dégivrage configurée pour déterminer si l'état de la pompe à chaleur (101) prédit par l'unité de prédiction remplit une première condition indiquant qu'il est nécessaire de basculer un mode de fonctionnement de la pompe à chaleur (101) vers le mode de dégivrage ; et
une unité d'instruction configurée pour émettre une notification pour basculer le mode de fonctionnement de la pompe à chaleur (101) vers le mode de dégivrage avant le début de la période de modulation de puissance lorsque l'unité de détermination détermine que l'état de la pompe à chaleur (101) pendant la période donnée remplit la première condition,
l'unité de commande de système de la pompe à chaleur comportant en outre une unité de commande d'opération de modulation de puissance configurée pour amener la pompe à chaleur (101) à fonctionner selon un mode de modulation de puissance pendant la période de modulation de puissance, le mode de modulation de puissance occasionnant une puissance de sortie de la pompe à chaleur (101) plus faible que la puissance de sortie de la pompe à chaleur (101) dans le mode de chauffage.

10. Système de chauffage selon la revendication 9,
dans lequel le dispositif de chauffage (100) comprend en outre une unité de commande de pompe à chaleur (103) configurée pour commander le fonctionnement de la pompe à chaleur (101), et
lorsque l'unité de commande de pompe à chaleur (103) obtient la notification de l'unité d'instruction, l'unité de commande de pompe à chaleur (103) est configurée pour basculer le mode de fonctionnement de la pompe à chaleur (101) vers le mode de dégivrage avant le début de la période de modulation de puissance.

11. Système de chauffage selon la revendication 10, dans lequel, lorsque l'unité de détermination de dégivrage détermine que l'état de la pompe à chaleur (101) pendant la période donnée ne remplit pas la première condition, l'unité de commande de la pompe à chaleur (103) est configurée pour amener la pompe à chaleur à fonctionner selon le mode de chauffage, sans faire basculer le mode de fonctionnement de la pompe à chaleur vers le mode de dégivrage avant le début de la période de modulation de puissance.

12. Système de chauffage selon l'une quelconque des revendications 9 à 11, dans lequel le dispositif de chauffage (100) comporte en outre une unité de détection de température de surface d'échangeur de chaleur.

13. Système de chauffage selon l'une quelconque des revendications 9 à 12, dans lequel le dispositif de chauffage comporte en outre :
une unité de commande de pompe à chaleur (103) configurée pour faire basculer un mode de fonctionnement de la pompe à chaleur (101) entre le mode de chauffage pour générer la chaleur destinée à être rayonnée par le radiateur (101a, 104) et le mode de dégivrage pour éliminer le givre formé sur la pompe à chaleur (101) ; et
l'unité de commande de système (8) est configurée pour commander l'unité de commande de pompe à chaleur (103).
